# FASCICULE DE BREVET EUROPEEN

(11) **EP 4 185 914 B1**
(45) Date de publication et mention de la délivrance du brevet: **22.05.2024**
(21) Numéro de dépôt: 21748511.9
(22) Date de dépôt: 06.07.2021
(51) Int. Cl.: G02B 21/00

(54) **SYSTÈMES ET PROCÉDÉS D'ANALYSE MICROSCOPIQUE D'UN ÉCHANTILLON**
SYSTEME UND VERFAHREN ZUR DURCHFÜHRUNG EINER MIKROSKOPISCHEN ANALYSE EINER PROBE
SYSTEMS AND METHODS FOR PERFORMING MICROSCOPIC ANALYSIS OF A SAMPLE

(30) Priorité: 22.07.2020 FR 2007700
(43) Date de publication de la demande: 31.05.2023
(73) Titulaire: Damae Medical, 75013 Paris (FR)
(72) Inventeur: OGIEN, Jonas, 75014 Paris (FR); LEVECQ, Olivier, 75009 Paris (FR)
(74) Mandataire: Osha BWB
(86) Numéro de dépôt international: PCT/EP2021/068661
(87) Numéro de publication internationale: WO 2022/017784

(56) Documents cités:
- WO-A1-2012/004388
- WO-A1-2017/139712
- FR-A1- 2 814 247

## Description

### Domaine technique de l'invention

La présente description concerne des systèmes et procédés d'analyse microscopique d'un échantillon, et concerne en particulier l'analyse microscopique d'un tissu biologique, notamment la peau.

### Etat de la technique

Dans le cadre d'un examen dermatologique notamment, il est connu de procéder à un examen dermoscopique, c'est-à-dire une observation de la surface de la peau à l'aide d'un instrument optique grossissant, puis à une analyse microscopique locale en fonction des observations faites sur l'image grand champ obtenue par l'examen dermoscopique. L'analyse microscopique comprend par exemple l'imagerie microscopique ou l'analyse spectroscopique.

Parmi les techniques d'imagerie, on connaît notamment, et de façon non limitative, des techniques de microscopie confocale comme par exemple la technique décrite dans Raj adhyaksha *et al* [Réf. 1] ou K. König *et al* [Réf 2] pour la microscopie non linéaire. On connaît également des techniques de microscopie tomographique par cohérence optique (ou OCM selon l'expression anglo-saxonne « *Optical Coherence Microscopy* »), dans le domaine temporel (« Time Domain OCM ») ou dans le domaine fréquentiel (« Frequency Domain OCM »). Parmi les techniques OCM, on connaît des techniques combinant la tomographie par cohérence optique et la microscopie confocale (voir par exemple Schmitt *et al* [Réf. 3]) afin d'améliorer la résolution latérale.

Plus précisément, la demande de brevet WO2015092019 [Réf. 4] décrit une technique de visualisation de la structure interne d'un objet semi-transparent agencé au foyer d'un objectif de microscope, par exemple un tissu biologique, afin d'obtenir des coupes verticales ou « *B-Scans* » orthogonales à la surface de l'objet, à une cadence élevée (plusieurs coupes par seconde), avec une haute résolution spatiale, c'est-à-dire de l'ordre de 1 µm, aussi bien axialement que latéralement, et une profondeur de pénétration satisfaisante, de l'ordre du millimètre. Cette technique est basée sur la microscopie par cohérence optique mais présente une configuration de filtrage confocal linéaire ou unidimensionnel (dans une direction) ; pour cela, la ligne d'éclairage est conjuguée optiquement, notamment au moyen de l'objectif de microscope, avec un détecteur linéaire dont l'aire de détection présente une largeur sensiblement identique à une largeur de l'image de la ligne, résultant en un filtrage spatial d'une région de l'objet à observer. Une telle technique est ainsi connue sous le nom de LC-OCT selon l'expression anglo-saxonne *(« Line-field Confocal Optical Cohérence Tomography »).*

L'article de Y. Chen *et al.* [Réf. 5] a également proposé un dispositif de microscopie tomographique par cohérence optique à balayage linéaire, mais dans lequel un échantillon est déplacé dans un plan perpendiculaire à un axe optique de l'objectif de microscope, et selon une direction perpendiculaire à la ligne d'éclairage, permettant de former des images *en face* de l'échantillon (ou « *C-Scans »).*

Parmi les techniques d'analyse spectroscopique d'un échantillon, et notamment d'un tissu biologique comme la peau, on connaît par exemple et de façon non limitative la spectroscopie Raman qui permet de former une empreinte moléculaire des tissus biologiques, comme décrit par exemple dans Schleusener *et al.* [Réf. 6]. L'article de revue de E. Drakaki *et al.* [Réf. 7] présente de façon générale différentes techniques de spectroscopie appliquée à l'analyse microscopique de la peau.

Toutes les techniques d'analyse microscopique décrites ci-dessus, que ce soit pour l'imagerie ou pour la spectroscopie, utilisent un objectif de microscope présentant une ouverture numérique nominale importante, typiquement supérieure ou égale à 0,5, pour un champ de vue donné, typiquement entre environ 0,2 mm et environ 1,5 mm.

En pratique, afin d'obtenir une information pertinente lors de l'analyse microscopique, il est important pour le praticien de retrouver lors de l'analyse microscopique la zone qui lui paraissait suspicieuse dans l'image obtenue lors de l'examen dermoscopique.

Cependant, retrouver précisément en analyse microscopique une zone suspicieuse identifiée en dermatoscopie est complexe, car les images sur lesquelles il est possible de se baser pour la visée sont obtenues sur des champs bien plus faibles qu'en dermatoscopie, et présentent un aspect très différent. Ceci est encore plus critique lorsque l'analyse microscopique ne produit pas d'images, comme la microspectroscopie Raman par exemple.

Différentes solutions ont été proposées pour permettre à un praticien de repérer sur l'image dermoscopique le champ d'analyse pour l'analyse microscopique.

La demande de brevet WO2017139712 [Réf. 8] décrit par exemple un système dans lequel sont combinées microscopie confocale (ou RCM selon l'abréviation de l'expression anglo-saxonne « *réflectance confocal microscopy* ») et dermatoscopie grand champ (ou WFD selon l'abréviation de l'expression anglo-saxonne « *widefield dermoscopy* ). Pour cela, une micro-caméra est intégrée directement dans l'objectif de microscope afin de former une image de surface en réflexion grand champ. Cependant, un tel système est complexe à fabriquer et à intégrer ; par ailleurs, les images obtenues par la micro-caméra sont de médiocre qualité.

Le brevet US7864996 [Réf. 9] décrit un système d'imagerie confocale couplé avec un dermatoscope. Le dermatoscope est monté sur un module fixé à la peau, et permet d'imager la même zone que le microscope confocal qui peut être fixé sur le même module. L'acquisition d'une image dermoscopique (ou image « macroscopique ») est effectuée, suivie de l'acquisition d'images confocales. Une corrélation précise entre les images est faite afin de représenter sur l'image dermoscopique la position de l'image formée par le système d'imagerie confocale. Cependant, le système ainsi décrit requiert un module supplémentaire pour la fixation de deux sondes distinctes, ce module pouvant difficilement être fixé à tout endroit sur la peau. Par ailleurs, une procédure complexe doit être suivie pour l'acquisition des images afin d'obtenir la corrélation des images dermoscopique et confocale.

En microspectroscopie Raman, il est décrit dans Z. Wu *et al.* [Réf 10] comment acquérir et localiser des signaux micro-Raman dans des tissus au moyen d'une imagerie de microscopie confocale en réflexion, et en utilisant une source laser unique. Cependant, une image confocale est moins facile à utiliser comme image de référence pour un praticien qu'une image dermoscopique.

La présente description propose des dispositifs et procédés d'analyse microscopique offrant la possibilité à un utilisateur de repérer avec précision et au moyen d'un procédé d'acquisition simple, le champ de l'analyse microscopique dans une image en réflexion de surface grand champ, dont la qualité d'image est proche de la qualité d'une image dermoscopique.

### Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un système d'analyse microscopique d'un échantillon comprenant :
- une voie d'analyse microscopique comprenant :
   - un objectif de microscope d'ouverture numérique nominale donnée dans un champ de vue donné;
   - une voie d'éclairage configurée pour éclairer l'échantillon à travers l'objectif de microscope selon un premier motif d' éclairage et dans une première bande spectrale;
   - une voie de détection comprenant ledit objectif de microscope, ladite voie de détection étant configurée pour détecter dans ledit champ de vue et selon un motif de détection, un faisceau lumineux émis par l'échantillon en réponse audit éclairage de l'échantillon et générer un signal de détection;
   - une unité de traitement configurée pour générer une information d'analyse microscopique de l'échantillon à partir dudit signal de détection ;
- une voie de visée comprenant :
   - ledit objectif de microscope;
   - un dispositif d' éclairage plein champ configuré pour éclairer l'échantillon dans une deuxième bande spectrale ;
   - un détecteur bidimensionnel,
   - un ou plusieurs éléments d'imagerie formant, avec ledit objectif de microscope, un dispositif d'imagerie plein champ configuré pour conjuguer optiquement un champ effectif donné de l'échantillon englobant ledit champ de vue avec une aire de détection du détecteur bidimensionnel, et former une image de visée en réflexion de surface dudit champ effectif;
- un élément séparateur de faisceaux agencé en amont de l'objectif de microscope pour séparer la voie d'analyse et la voie de visée ;
- un module d'affichage configuré pour représenter ladite image de visée et, sur ladite image de visée, un élément d'image indiquant la position dudit motif de détection. Dans la présente description, on appelle « champ de vue » de l'objectif de microscope, une région d'un plan focal de l'objectif de microscope, situé dans l'espace objet (espace de l'échantillon) pour lequel le fabriquant garantit une ouverture numérique nominale. Une ouverture numérique nominale est par exemple comprise entre environ 0,1 et environ 1,4, par exemple entre environ 0,5 et environ 0,9. Le champ de vue peut être défini par un cercle de diamètre compris entre environ 100 µm et environ 5 mm, par exemple entre environ 500 µm et environ 1,5 mm.

On appelle « champ effectif » de l'objectif de microscope, un champ dans l'espace objet (espace de l'échantillon) qui est compris dans un champ total de l'objectif de microscope, qui englobe ledit champ de vue et dont les dimensions sont limitées par le dispositif d'imagerie plein champ de la voie de visée. Le champ effectif peut être défini par un cercle de diamètre compris entre environ 1 mm et environ 10 mm, par exemple entre environ 2 mm et environ 5 mm.

Dans la présente description, le motif d'éclairage dépend de la voie d'éclairage de la voie d'analyse microscopique et peut comprendre un point d'éclairage, une ligne d'éclairage ou une surface d'éclairage, par exemple une surface rectangulaire résultant du balayage d'un point d'éclairage ou d'une ligne d'éclairage. Un point d'éclairage est défini plus précisément comme le motif de diffraction résultant de la focalisation, par l'objectif de microscope de la voie d'analyse microscopique, d'un faisceau de lumière collimaté incident sur ledit objectif. Le motif d' éclairage peut également comprendre une surface d'éclairage qui ne résulte pas d'un balayage, par exemple une surface à géométrie circulaire, dans le cas d'une voie d'analyse microscopique plein champ. Le faisceau lumineux émis par l'échantillon en réponse à l'éclairage de l'échantillon peut être un faisceau réfléchi, rétrodiffusé, ou résultant d'un processus d'émission à une autre longueur d'onde (par exemple fluorescence, diffusion Raman, etc.)

Par ailleurs, le motif de détection est inclus dans le champ de vue et est inclus dans le motif d'éclairage ou est du même ordre de grandeur, et dépend de la voie de détection de la voie d'analyse microscopique. Le motif de détection peut comprendre un point de détection, une ligne de détection ou une surface de détection, par exemple une surface rectangulaire résultant du balayage d'une ligne, ou, dans le cas d'une voie d'analyse microscopique plein champ, une surface conjuguée optiquement avec une aire de détection d'un détecteur. Un point de détection est ici défini dans l'espace objet par une zone élémentaire conjuguée optiquement avec un détecteur élémentaire d'un détecteur de la voie de détection de la voie d'analyse microscopique.

La déposante a montré que le système d'analyse microscopique d'un échantillon selon le premier aspect permet à un utilisateur de repérer avec précision le champ de l'analyse microscopique dans une image en réflexion de surface grand champ, ou « image de visée ». Ladite image en réflexion de surface grand champ peut présenter une qualité d'image proche de la qualité d'une image dermoscopique du fait que la voie de visée est déportée. Toutefois, le système conserve une très bonne compacité par rapport aux systèmes de l'état de l'art nécessitant deux sondes ([Réf 9] par exemple).

Selon un ou plusieurs exemples de réalisation, le dispositif d'imagerie plein champ de la voie de visée présente, dans l'espace objet de l'objectif de microscope, une ouverture numérique strictement inférieure à l'ouverture numérique nominale de l'objectif de microscope. Il est alors possible de bénéficier pour la voie de visée d'un champ effectif supérieur au champ de vue tout en limitant les aberrations et le vignettage potentiel, tout en maintenant des dimensions limitées pour le ou les élément(s) d'imagerie formant le dispositif d'imagerie plein champ. La qualité de l'image de visée est donc encore améliorée.

Selon un ou plusieurs exemples de réalisation, ladite voie de visée comprend en outre un diaphragme permettant de limiter l'ouverture numérique du dispositif d'imagerie plein champ. Selon d'autres exemples de réalisation, c'est directement l'un desdits éléments d'imagerie formant le dispositif d'imagerie plein champ qui est configuré pour former en outre un diaphragme pour la limitation de l'ouverture numérique du dispositif d'imagerie plein champ.

Selon un ou plusieurs exemples de réalisation, le dispositif d'imagerie plein champ de ladite voie de visée est ajustable en focalisation. Cela rend possible la formation d'une image de visée en réflexion de surface de l'échantillon même lorsque la voie d'analyse microscopique image en profondeur dans l'échantillon (cas de l'imagerie OCM par exemple).

Selon un ou plusieurs exemples de réalisation, le dispositif d'éclairage plein champ de la voie de visée comprend une pluralité de sources lumineuses agencées sur une périphérie d'une face distale de l'objectif de microscope, c'est-à-dire la face de l'objectif de microscope dans l'espace de l'échantillon. Cette configuration permet un éclairage direct de l'échantillon. Alternativement, le dispositif d'éclairage plein champ de la voie de visée peut comprendre une source agencée en amont de l'objectif de microscope et un élément séparateur de faisceau, par exemple un cube séparateur, configuré pour diriger un faisceau d'éclairage à travers l'objectif de microscope, vers l'échantillon.

Selon un ou plusieurs exemples de réalisation, la deuxième bande spectrale diffère au moins partiellement de la première bande spectrale et ladite voie de visée comprend des moyens de réduction de la puissance lumineuse au moins dans ladite première bande spectrale. Dans certains cas en effet, un faisceau d'éclairage de l'échantillon dans la voie d'éclairage de la voie d'analyse microscopique peut présenter une puissance lumineuse suffisamment forte pour éblouir le détecteur de la voie de visée. En réduisant la puissance lumineuse au moins dans ladite première bande spectrale, on limite un tel risque d'éblouissement.

Selon un ou plusieurs exemples de réalisation, la deuxième bande spectrale diffère au moins partiellement de la première bande spectrale et ledit élément séparateur de faisceaux comprend une lame ou un cube dichroïque, configurée pour séparer les faisceaux dans chacune desdites première et deuxième bandes spectrales. La lame dichroïque forme alors des moyens de réduction de la puissance lumineuse dans ladite première bande spectrale. Selon un ou plusieurs exemples de réalisation, la voie d'analyse microscopique comprend un dispositif de balayage d'un faisceau d'éclairage de l'échantillon et d'un faisceau émis par l'échantillon en réponse audit éclairage de l'échantillon et ledit élément séparateur de faisceaux fait partie du dispositif de balayage.

Selon un ou plusieurs exemples de réalisation, ledit élément d'image indiquant la position dudit motif de détection comprend un élément graphique déterminé au moyen d'une calibration préalable. Cette configuration est particulièrement avantageuse notamment lorsque le motif d'éclairage n'est pas détecté par le détecteur de la voie de visée, soit par exemple parce que le détecteur de la voie de visée n'est pas sensible dans la première bande spectrale, soit parce qu'on coupe la première bande spectrale dans la voie de visée pour limiter un éblouissement. Cette configuration est également avantageuse lorsque le motif d'éclairage est difficilement identifiable dans l'image de visée, ou si le motif de détection est sensiblement différent du motif d'éclairage.

Selon un ou plusieurs exemples de réalisation, ladite voie d'analyse microscopique est une voie d'imagerie confocale et/ou d'imagerie tomographique par cohérence optique et ladite information d'analyse microscopique de l'échantillon comprend au moins une image de l'échantillon. Par exemple, la voie d'analyse microscopique est une voie d'imagerie tomographique par cohérence optique telle que décrite dans l'état de l'art et est configurée pour former des images *B-Scans, C-Scans* (ou images *en face*) de l'échantillon ou des images 3D de l'échantillon. De façon connue, une image en coupe de l'échantillon dite *« B-Scan* », est une image formée dans un plan parallèle à l'axe optique de l'objectif de microscope ; une image en coupe de l'échantillon dite « *C-Scan* », ou image *en face,* est une image formée dans un plan perpendiculaire à l'axe optique de l'objectif de microscope, et une image 3D de l'échantillon résulte de l'acquisition d'une pluralité d'images B-Scans ou d'images C-Scans et permet ainsi une analyse de l'échantillon dans un volume.

Selon un ou plusieurs exemples de réalisation, ladite voie d'analyse microscopique est une voie d'analyse spectroscopique et ladite information d'analyse microscopique de l'échantillon comprend au moins un spectre dudit faisceau lumineux émis par l'échantillon en au moins un point de l'échantillon.

Selon un deuxième aspect, la présente description concerne un procédé d'analyse d'un échantillon, comprenant :
- une analyse microscopique de l'échantillon au moyen d'une voie d'analyse microscopique comprenant un objectif de microscope d'ouverture numérique nominale donnée dans un champ de vue donné, ladite analyse microscopique comprenant :
   - l'éclairage de l'échantillon à travers l'objectif de microscope selon un premier motif d'éclairage donné et dans une première bande spectrale;
   - la détection dans ledit champ de vue et selon un motif de détection, d'un faisceau lumineux émis par l'échantillon en réponse audit éclairage de l'échantillon pour former un signal de détection;
   - le traitement dudit signal de détection pour générer une information d'analyse microscopique de l'échantillon ;
- la formation d'une image de visée en réflexion de surface d'un champ effectif donné de l'échantillon englobant ledit champ de vue, au moyen d'une voie de visée comprenant ledit objectif de microscope, un détecteur bidimensionnel, un ou plusieurs éléments d'imagerie configuré(s) pour former avec ledit objectif de microscope un dispositif d'imagerie plein champ, la formation de l'image de visée comprenant :
   - l'éclairage plein champ de l'échantillon dans une deuxième bande spectrale ;
   - la conjugaison optique du champ effectif de l'échantillon avec une aire de détection du détecteur bidimensionnel, au moyen dudit dispositif d'imagerie plein champ, pour former ladite image de visée;
- l'affichage de ladite image de visée et, sur ladite image de visée, l'affichage d'un élément d'image indiquant la position dudit motif de détection.

Selon un ou plusieurs exemples de réalisation, l'analyse microscopique de l'échantillon et la formation d'une image de visée sont réalisées en continu, ce qui implique que les sources d'éclairage de la voie d'analyse et de la voie de visée sont toutes les deux en fonctionnement lors de l'utilisation du système d'analyse microscopique. Cette configuration est possible dans le cas notamment où un faisceau d'éclairage de l'échantillon dans la voie d'analyse microscopique est invisible ou très atténuée dans la voie de visée, ou plus généralement lorsque le faisceau d'éclairage de l'échantillon dans la voie d'analyse microscopique ne perturbe pas l'acquisition de l'image de visée.

Selon un ou plusieurs exemples de réalisation, le procédé d'analyse d'un échantillon selon le premier aspect comprend :
- une première étape de formation d'une image de visée de l'échantillon sans éclairage de la voie d'analyse microscopique,
- la détection d'une zone d'analyse d'intérêt dans l'image de visée de l'échantillon et
- l'analyse microscopique dudit échantillon dans ladite zone d'intérêt.

Cette configuration est intéressante notamment dans le cas où un faisceau d'éclairage de l'échantillon dans la voie d'analyse microscopique peut perturber la détection dans la voie de visée mais l'éclairage de l'échantillon dans la voie de visée ne perturbe pas la détection dans la voie d'analyse microscopique.

Il est également possible d'éteindre l'éclairage de la voie de visée pendant l'analyse microscopique de l'échantillon si l'éclairage de l'échantillon dans la voie de visée perturbe la détection dans la voie d'analyse microscopique. Dans ce cas, l'analyse microscopique de l'échantillon et la formation d'une image de visée sont réalisées successivement.

Selon un ou plusieurs exemples de réalisation, l'analyse microscopique de l'échantillon comprend une imagerie confocale et/ou tomographique par cohérence optique de l'échantillon permettant de former des images B-Scans, C-Scans ou 3D de l'échantillon. Selon un ou plusieurs exemples de réalisation, le procédé comprend en outre l'affichage d'au moins une desdites images B-Scans et C-Scans, et/ou dans le cas de la formation d'une image 3D, l'affichage d'au moins une desdites images B-Scans et C-Scans extraites de l'image 3D.

Par exemple, l'analyse microscopique de l'échantillon comprend la formation d'images de type B-Scan avec une cadence d'imagerie donnée et ladite cadence d'imagerie est synchronisée avec une cadence d'acquisition des images de visée. L'acquisition d'images B-Scans pouvant nécessiter un balayage du faisceau d'éclairage en profondeur dans l'échantillon, par exemple au moyen d'un déplacement axial de l'objectif de microscope, la synchronisation permet d'assurer que les images de visées sont acquises avec une position identique de l'objectif de microscope vis-à-vis de la surface de l'échantillon.

Selon un ou plusieurs exemples de réalisation, l'analyse microscopique de l'échantillon comprend une analyse spectroscopique de l'échantillon.

Selon un ou plusieurs exemples de réalisation, le procédé selon le deuxième aspect comprend une étape de calibration préalable permettant de déterminer pour ledit élément d'image un élément graphique indiquant la position dudit motif de détection.

Selon un ou plusieurs exemples de réalisation, le procédé selon le deuxième aspect comprend en outre l'affichage d'un marqueur superposé audit élément d'image de l'image de visée, ledit marqueur permettant à un utilisateur de cibler un point d'intérêt dans le motif de détection. Ainsi, dans certains modes de réalisation, un utilisateur peut positionner le marqueur sur ledit élément d'image pour obtenir une information d'analyse microscopique dans l'échantillon, au niveau dudit marqueur. Un utilisateur peut également, dans certains exemples de réalisation, sélectionner un point d'intérêt au niveau de l'information d'analyse microscopique et voir le marqueur se positionner à l'endroit correspondant de l'élément d'image. Ainsi par exemple, dans le cas où l'analyse microscopique de l'échantillon comprend la formation d'images B-Scans et/ou C-Scans de l'échantillon, un utilisateur pourra cibler un point dans une desdites images affichées simultanément à l'image de visée, par exemple au moyen d'un réticule, et voir le marqueur se positionner sur l'image de visée, le marqueur correspondant à la projection du point ciblé sur la surface de l'échantillon. L'utilisateur pourra aussi positionner le marqueur sur l'image de visée et voir un réticule se positionner sur une desdites images, dans une position correspondant à celle du marqueur.

Selon un ou plusieurs exemples de réalisation, l'échantillon est un tissu biologique, par exemple la peau.

### Brève description des figures

D'autres avantages et caractéristiques de l'invention apparaîtront à la lecture de la description, illustrée par les figures suivantes :
[Fig. 1A], un schéma illustrant un premier exemple d'un système d'analyse microscopique d'un échantillon selon la présente description ;
[Fig. 1B], un schéma illustrant un deuxième exemple d'un système d'analyse microscopique d'un échantillon selon la présente description ;
[Fig. 1C], un schéma illustrant un troisième exemple d'un système d'analyse microscopique d'un échantillon selon la présente description ;
[Fig. 2], un schéma illustrant selon un exemple, une voie de visée d'un système d'analyse microscopique d'un échantillon selon la présente description ;
[Fig. 3A], un schéma illustrant selon un premier exemple, un dispositif d'imagerie plein champ d'une voie de visée d'un système d'analyse microscopique selon la présente description ;
[Fig. 3B], un schéma illustrant selon un deuxième exemple, un dispositif d'imagerie plein champ d'une voie de visée d'un système d'analyse microscopique selon la présente description ;
[Fig. 4], un schéma illustrant selon différents exemples un champ de vue, un champ effectif et un champ total de l'objectif de microscope ainsi que différents motifs de détection ;
[Fig. 5A], des schémas illustrant des étapes de calibration pour déterminer, pour ledit élément d'image, un élément graphique indiquant la position dudit motif de détection, selon un exemple appliqué à l'imagerie microscopique;
[Fig. 5B], des schémas illustrant des étapes de calibration pour déterminer, pour ledit élément d'image, un élément graphique indiquant la position dudit motif de détection, selon un exemple appliqué à l'analyse spectroscopique;
[Fig. 6A], une première image illustrant selon un exemple l'affichage d'une image de visée et d'une d'image microscopique (B-Scan) obtenues au moyen d'un procédé selon la présente description ;
[Fig. 6B], une deuxième image illustrant selon ce même exemple l'affichage d'une image de visée et d'une d'image microscopique (B-Scan) obtenues au moyen d'un procédé selon la présente description ;
[Fig. 7], des images illustrant selon un exemple l'affichage d'une image de visée et d'images microscopiques (B-Scan et C-Scan) obtenues au moyen d'un procédé selon la présente description.

### Description détaillée de l'invention

Dans la description détaillée qui suit, de nombreux détails spécifiques sont exposés afin de fournir une compréhension plus approfondie de la présente description. Cependant, il apparaîtra à l'homme du métier que la présente description peut être mise en oeuvre sans ces détails spécifiques. Dans d'autres cas, des caractéristiques bien connues n'ont pas été décrites en détail pour éviter de compliquer inutilement la description.

Par ailleurs, sur les figures, les éléments ne sont pas représentés à l'échelle pour une meilleure visibilité.

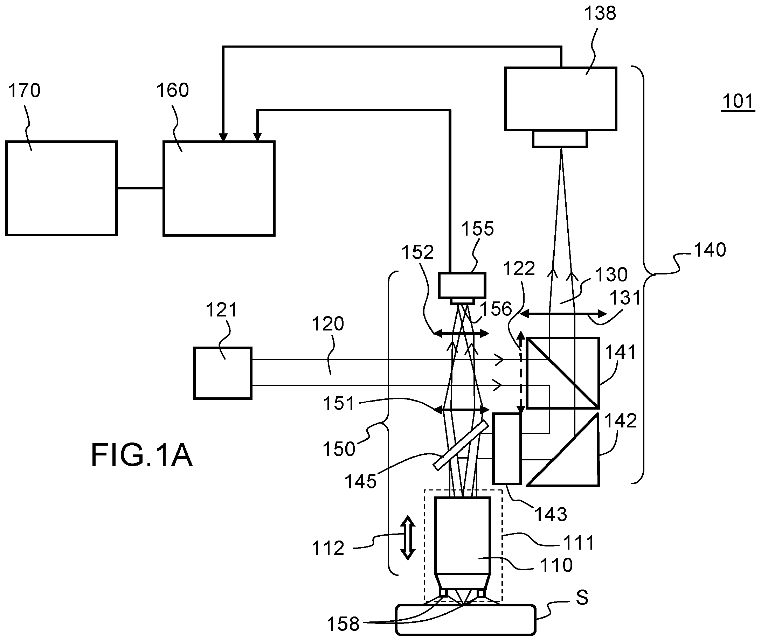

La Fig. 1A représente un premier système d'analyse microscopique 101 d'un échantillon S dans lequel la voie d'analyse microscopique est une voie d'imagerie confocale à balayage (point ou ligne), l'imagerie pouvant être une imagerie non linéaire.

Le système d'analyse microscopique 101 comprend un objectif de microscope 110 d'ouverture numérique ON nominale donnée dans un champ de vue donné, une voie d'analyse microscopique 140 qui est une voie d'imagerie confocale à balayage et une voie de visée 150.

La voie d'analyse microscopique 140 comprend dans cet exemple une voie d'éclairage 120 configurée pour éclairer l'échantillon à travers l'objectif de microscope 110 selon un motif d'éclairage donné et dans une première bande spectrale et une voie de détection 130 comprenant ledit objectif de microscope 110, ladite voie de détection étant configurée pour détecter dans le champ de vue et selon un motif de détection donné, un faisceau lumineux émis par l'échantillon en réponse audit éclairage de l'échantillon. La voie d'analyse microscopique 140 comprend par ailleurs une unité de traitement 160 et un module d'affichage 170.

La voie d'éclairage 120 de la voie d'analyse microscopique 140 comprend dans cet exemple une source d'éclairage 121 et une lentille ou miroir de renvoi cylindrique 122 (optionnel). La voie d'éclairage comprend également un élément séparateur 141 (cube séparateur ou lame séparatrice) et un élément réfléchissant 142 (optionnel) configurés pour envoyer un faisceau d'éclairage émis par la source d'éclairage 121 vers l'objectif de microscope 110, ainsi qu'un dispositif de balayage 143 du faisceau d'éclairage configuré pour balayer le faisceau d'éclairage selon une ou deux dimensions. Un élément séparateur 145 est configuré pour séparer la voie de visée 150 et la voie d'analyse microscopique 140. L'élément séparateur 145 est par exemple un cube séparateur ou une lame séparatrice présentant un ratio réflexion/transmission compris entre 10/90 et 90/10 ; il peut être d'environ 50/50. Par ailleurs, une plateforme 111 (optionnelle) solidaire de l'objectif de microscope 110 permet un déplacement axial 112 de l'objectif par rapport à l'échantillon. La source d'éclairage 121 peut comprendre par exemple une source d'émission de lumière cohérente (spatialement), monochromatique et collimatée. Des optiques et/ou filtres spatiaux (non représentés) peuvent rendre la source collimatée et/ou cohérente et/ou monochromatique. La longueur d'onde de la source est fonction de l'application. Pour la microscopie confocale utilisant une réflexion du faisceau d'éclairage sur l'échantillon, et appliqué à l'imagerie de la peau, une longueur d'onde typique de la source d'éclairage est autour de 800 nm. Pour la microscopie confocale utilisant la fluorescence ou la microscopie non linéaire, la longueur d'onde pourra être adaptée à la longueur d'excitation de fluorescence ou d'émission non linéaire de l'échantillon. En fonction des applications, une source polychromatique peut également être utilisée. Par ailleurs, en microscopie non linéaire, par exemple en microscopie CARS ou SRS, la source 121 peut comprendre une pluralité de sources d'émission distinctes (cohérentes spatialement, monochromatiques et collimatées), combinées via un cube ou une lame.

Dans le cas de la fluorescence/microscopie non linéaire, on utilisera avantageusement un élément séparateur 141 dichroïque réfléchissant la longueur d'onde d'excitation et transmettant la longueur d'onde d'émission de l'échantillon (ou inversement).

L'élément optique cylindrique 122 est optionnel et permet une microscopie avec éclairage selon une ligne (microscopie dite « *line-field »).*

Le dispositif de balayage 143 du faisceau d'éclairage peut être configuré pour un balayage bidimensionnel pour former une image à partir du balayage d'un point d'éclairage. Dans le cas d'un système « *line-field »* avec lentille ou miroir de renvoi cylindrique 122, le dispositif de balayage 143 du faisceau d'éclairage pourra être configuré pour un balayage uni-dimensionnel. Le dispositif de balayage peut comprendre un ou plusieurs éléments de balayage choisis parmi les éléments suivants : miroirs galvanométriques, miroirs polygonaux, systèmes de déflexion électro ou acousto-optique, ou une combinaison de ces différents éléments (dans le cas d'un balayage bi-dimensionnel). Le dispositif de balayage peut aussi inclure des optiques pour conjuguer au moins un desdits éléments de balayage à une pupille d'entrée de l'objectif de microscope 110 afin par exemple d'éviter un vignettage.

La voie de détection 130 de la voie d'analyse microscopique 140 comprend dans cet exemple un détecteur 138, l'objectif de microscope 110, le dispositif de balayage 143 et les éléments réfléchissants ou partiellement réfléchissants 145, 142 (optionnel), 141 configurés pour envoyer un faisceau émis par l'échantillon S en réponse audit éclairage de l'échantillon vers le détecteur 138. La voie de détection 130 comprend en outre dans cet exemple un objectif 131 configuré pour conjuguer optiquement, avec l'objectif de microscope, un plan de l'échantillon S avec une aire de détection du détecteur 138. L'objectif 131 ou « lentille de tube » peut bien sûr être composé de plusieurs lentilles optiques et peut aussi être remplacé par un ou plusieurs éléments réfléchissants, par exemple un miroir sphérique ou parabolique.

Le détecteur 138 comprend un capteur optique avec une aire de détection, et peut aussi inclure des filtres spatiaux pour la détection confocale, si celle-ci n'est pas assurée par les dimensions de l'aire de détection, et/ou des filtres spectraux pour limiter la bande de longueurs d'onde détectée à la bande d'émission de l'échantillon dans le cas d'un système de fluorescence/microscopie non linéaire. Le capteur peut comprendre une surface élémentaire de détection (e.g. une photodiode) dans le cas d'un système à balayage ponctuel, un capteur unidimensionnel (e.g. une caméra linéaire) dans le cas d'un système *« line-field* », ou un capteur bidimensionnel dont seule une région d'intérêt est considérée afin de faire office d'aire de détection élémentaire ou de capteur unidimensionnel. Notons qu'un capteur bidimensionnel peut aussi être utilisé de façon « conventionnelle » si un deuxième dispositif de balayage analogue au dispositif 143 est placé en amont du capteur. L'unité de traitement 160 reçoit, de façon connue, un signal de détection généré par le détecteur 138 et reconstruit des images microscopiques à partir du signal de détection, par exemple une image 2D *en face* à partir d'un signal de détection résultant d'un balayage d'un motif d'éclairage point ou ligne par exemple.

L'unité de traitement est connectée à un module d'affichage 170 configuré pour représenter une image de visée et, sur l'image de visée, un élément d'image indiquant la position du motif de détection, comme cela sera illustré plus en détails par la suite. L'unité de traitement peut également être relié à une unité de stockage (non représenté) des images et/ou vidéos générées.

Le système d'analyse microscopique 101 comprend en outre la voie de visée 150. Comme illustré sur la Fig. 1A, la voie de visée 150 comprend l'objectif de microscope 110, l'élément séparateur de faisceaux 145, un dispositif d'éclairage plein champ 158 configuré pour éclairer l'échantillon dans une deuxième bande spectrale, un détecteur bidimensionnel 155 avec une aire de détection 156, et un ou plusieurs éléments d'imagerie représentés sur la Fig. 1A par les éléments 151, 152 configurés pour former, avec ledit objectif de microscope 110, un dispositif d'imagerie plein champ qui conjugue optiquement un champ effectif donné de l'échantillon avec l'aire de détection 156 du détecteur bidimensionnel 155. La voie de visée permet ainsi de former une image de visée en réflexion de surface du champ effectif qui, comme cela sera décrit plus en détails par la suite, englobe le champ de vue de l'objectif de microscope.

Dans cet exemple, le dispositif d'éclairage plein champ 158 comprend une pluralité de sources lumineuses agencées sur une périphérie d'une face distale de l'objectif de microscope 110 et permettant un éclairage direct de l'échantillon S. Les sources lumineuses sont par exemple des diodes électroluminescentes émettant à des longueurs d'onde comprises entre environ 400 nm et environ 800 nm. Bien entendu, d'autres dispositifs d'éclairage sont possibles, comme par exemple une source agencée en amont de l'objectif de microscope et un élément séparateur de faisceau, par exemple un cube séparateur, configuré pour diriger un faisceau d'éclairage à travers l'objectif de microscope, vers l'échantillon.

Comme illustré sur la Fig. 1A, le détecteur bidimensionnel 155 est relié dans cet exemple à l'unité de traitement 160 pour l'acquisition et l'affichage de l'image de visée sur le module d'affichage 170.

En fonctionnement, la voie de visée 150 permet ainsi de générer une image de visée en réflexion de surface de l'échantillon avec un champ plus important que le champ de vue de l'objectif de microscope. Par ailleurs, sur l'image de visée est représenté un élément d'image qui indique la position du motif de détection, le motif de détection pouvant être un point, une ligne ou une surface. Il est ainsi possible pour un utilisateur, par exemple un praticien, de repérer avec précision le champ de l'analyse microscopique dans l'image de visée grand champ.

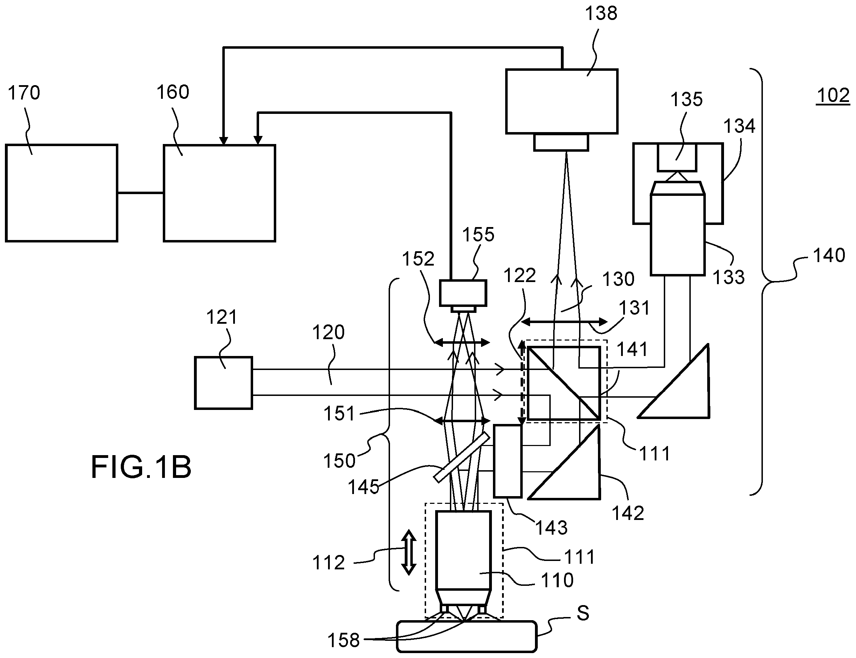

La Fig. 1B représente un deuxième exemple d'un système d'analyse microscopique 102 d'un échantillon S dans lequel la voie d'analyse microscopique est une voie de microscopie tomographique par cohérence optique (OCM), par exemple une voie OCM confocale, par exemple de type LC-OCT telle que décrite par exemple dans [Réf. 4] ou [Réf. 5].

Le système d'analyse microscopique 102 comprend comme dans l'exemple précédent un objectif de microscope 110 d'ouverture numérique (ON) nominale donnée dans un champ de vue donné, la voie d'analyse microscopique 140 qui est une voie de microscopie tomographique par cohérence optique (OCM), la voie de visée 150, une unité de traitement 160 et un module d'affichage 170.

Dans cet exemple, la voie de visée 150 peut être similaire à la voie de visée décrite en référence à la Fig. 1A, seule la voie d'analyse microscopique 140 étant différente.

Dans l'exemple de la Fig. 1B, la voie d'analyse microscopique 140 comprend une voie d'éclairage 120 configurée pour éclairer l'échantillon à travers l'objectif de microscope 110 selon un motif d'éclairage donné. La voie d'éclairage comprend dans cet exemple une source d'éclairage 121, une lentille ou miroir de renvoi cylindrique 122 (optionnel), un élément séparateur 141 (cube séparateur ou lame séparatrice) et un élément réfléchissant 142 (optionnel) configurés pour envoyer un faisceau d'éclairage émis par la source d'éclairage 121 vers l'objectif de microscope 110. La voie d'éclairage 120 comprend également dans cet exemple un dispositif de balayage 143 du faisceau d'éclairage configuré pour balayer le faisceau d'éclairage selon une ou deux dimensions, un élément séparateur 145 configuré pour séparer la voie de visée 150 et la voie d'analyse microscopique 140 et (optionnellement) une plateforme 111 solidaire de l'objectif de microscope 110 et (par exemple) de l'élément séparateur 141, configurée pour un déplacement axial 112 de l'objectif par rapport à l'échantillon.

La source d'éclairage 121 peut comprendre par exemple une source d'émission de lumière cohérente (spatialement), polychromatique, collimatée. Des optiques et/ou filtres spatiaux (non représentés) peuvent rendre la source collimatée et/ou cohérente et/ou avec une répartition spectrale spécifique. La longueur d'onde centrale de la source est fonction de l'application, comprise par exemple entre 600 nm et 1500 nm et la largeur spectrale comprise par exemple entre 50 nm et 250 nm environ. Dans le cas d'une application LC-OCT tel que décrite par exemple dans la Réf. 4, la source d'éclairage 121 peut comprendre par exemple, et de façon non limitative, un laser supercontinuum filtré spectralement par une fibre optique pour une émission autour d'environ 800 nm et collimatée par un miroir parabolique hors axe. Dans le cas d'une application à l'imagerie tomographique plein champ ou FF-OCT (selon l'abréviation de l'expression anglo-saxonne « Full Field OCT »), tel que décrit par exemple dans l'article de E. Beaurepaire et al. [Réf. 11], la source d'éclairage 121 peut être choisie non cohérente spatialement et comprendre des moyens d'éclairage plein champ de l'échantillon, par exemple un système d'éclairage Köhler. L'élément optique cylindrique 122 est optionnel et permet une microscopie avec éclairage selon une ligne (microscopie « *line-field »).*

Le dispositif de balayage 143 du faisceau d'éclairage peut être configuré pour un balayage unidimensionnel ou bidimensionnel d'un point ou d'une ligne pour former de façon connue une image en coupe de l'échantillon dite « *B-Scan* », c'est-à-dire dans un plan parallèle à l'axe optique de l'objectif de microscope, une image en coupe de l'échantillon dite « *C-Scan* », ou image *en face*, c'est-à-dire dans un plan perpendiculaire à l'axe optique de l'objectif de microscope, ou une image 3D de l'échantillon résultant de l'acquisition d'une pluralité d'images B-Scans ou d'images C-Scans. Comme précédemment, le dispositif de balayage peut comprendre un ou plusieurs éléments de balayage choisis parmi les éléments suivants : miroirs galvanométriques, miroirs polygonaux, systèmes de déflexion électro ou acousto-optique, ou une combinaison de ces différents éléments (dans le cas d'un balayage bi-dimensionnel). Le dispositif de balayage peut aussi inclure des optiques pour conjuguer au moins un desdits éléments de balayage à une pupille d'entrée de l'objectif de microscope 110 afin par exemple d'éviter un vignettage.

La voie de détection 130 de la voie d'analyse microscopique est configurée pour détecter un faisceau lumineux émis par l'échantillon en réponse audit éclairage de l'échantillon, selon un motif de détection donné, mais diffère de la voie de détection de la voie d'analyse microscopique illustrée sur la Fig. 1A. Notamment, la voie de détection comprend un interféromètre pour la mise en oeuvre de la microscopie tomographique par cohérence optique. Plus précisément, l'interféromètre comprend un bras objet avec l'objectif de microscope 110, le dispositif de balayage 143 et les éléments réfléchissants ou partiellement réfléchissants 145, 142, 141 configurés pour envoyer un faisceau émis par l'échantillon S en réponse audit éclairage de l'échantillon vers un détecteur 138. L'interféromètre de la voie de détection comprend en outre un bras de référence, séparé dans cet exemple du bras objet par le cube séparateur 141, et comprenant de façon connue un objectif de microscope 133 (optionnel), par exemple similaire à l'objectif de microscope 110 pour assurer la compensation de la dispersion, un système de compensation de la dispersion (optionnel, non représenté sur la Fig. 1B, notamment dans le cas où il n'y a pas d'objectif de microscope 133 ), un miroir de référence 135, une plateforme 134 (optionnelle) configurée par exemple pour faire déplacer le miroir de référence 135 lorsqu'une modulation du chemin optique sur le bras de référence est requise. La voie de détection comprend en outre dans cet exemple un objectif 131 configuré pour conjuguer optiquement, avec l'objectif de microscope, un plan de l'échantillon S avec une aire de détection du détecteur 138.

Le détecteur 138 comprend, comme dans l'exemple précédent, un capteur optique avec une aire de détection, et peut aussi inclure des filtres spatiaux pour la détection confocale, si celle-ci n'est pas assurée par les dimensions de l'aire de détection, et/ou des filtres spectraux pour limiter la bande de longueurs d'onde détectée. Le capteur peut comprendre une surface élémentaire de détection (e.g. une photodiode) dans le cas d'un système à balayage ponctuel, un capteur unidimensionnel (e.g. une caméra linéaire) dans le cas d'un système « *line-field* », ou un capteur bidimensionnel dont seule une région d'intérêt est considérée afin de faire office d'aire de détection élémentaire ou de capteur unidimensionnel. Dans le cas d'une application FF-OCT, un capteur bidimensionnel peut être utilisé de façon conventionnelle.

En fonctionnement, des interférences sont créées au niveau de l'aire de détection du détecteur 138 entre la lumière issue du bras de référence et la lumière rétrodiffusée par l'échantillon éclairé selon le motif d'éclairage, éventuellement et de façon connue avec une modulation de la différence de marche entre le bras de référence et le bras objet de l'échantillon, pour la formation d'images tomographiques, notamment d'images *en face.* L'unité de traitement 160 reçoit, de façon connue, des signaux de détection générés par le détecteur 138 et résultant de la détection d'interférences et est configurée pour la reconstitution d'images microscopiques à partir des signaux de détection, par exemple des image en coupe 2D (B-Scan ou C-Scan). L'unité de traitement 160 est connectée à un module d'affichage 170 configuré pour représenter l'image de visée et, sur l'image de visée, un élément d'image indiquant la position du motif de détection, comme cela sera illustré plus en détails par la suite. L'unité de traitement peut également être relié à une unité de stockage (non représenté) des images et/ou vidéos générées.

Une telle voie d'analyse microscopique 140 fonctionne ainsi comme une voie de microscopie tomographique par cohérence optique connue de l'état de l'art. Bien qu'un exemple particulier soit représenté sur la Fig. 1B, l'homme du métier comprendra que le système d'analyse microscopique selon la présente description s'applique à tout montage connu de l'état de l'art pour la microscopie tomographique par cohérence optique, les éléments optomécaniques représentés sur la Fig. 1B pouvant être adaptés en conséquence. Selon des exemples de réalisation, dans le cas d'une voie d'analyse microscopique adaptée à la formation d'images en coupe verticales de l'échantillon (B-Scan) par balayage d'une ligne en profondeur, la formation d'images B-Scan pourra être synchronisée avec une cadence d'acquisition des images de visée. En effet, lorsque l'acquisition d'images B-Scans comprend un balayage du faisceau d'éclairage en profondeur dans l'échantillon au moyen d'un déplacement de l'objectif de microscope par exemple, la synchronisation permet d'assurer que les images de visées sont acquises avec une position identique de l'objectif de microscope vis-à-vis de la surface de l'échantillon.

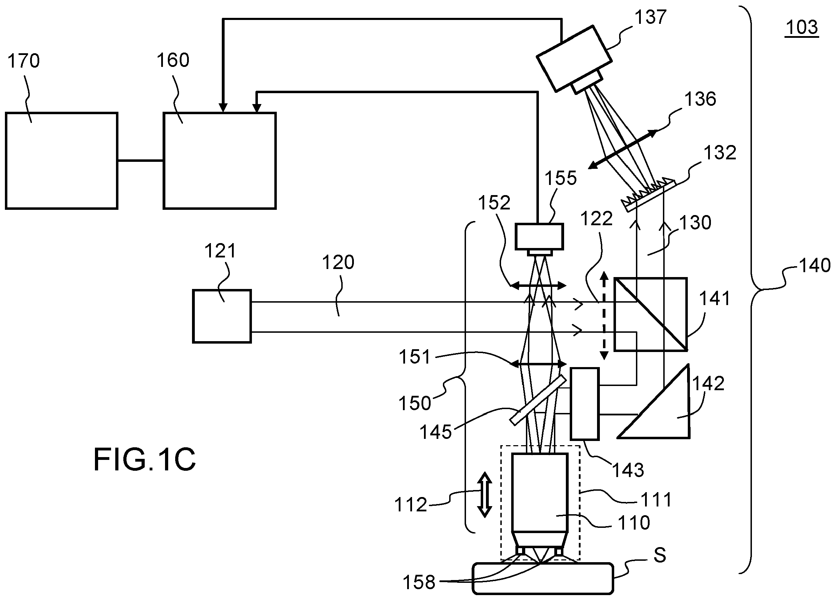

La Fig. 1C représente un troisième exemple d'un système d'analyse microscopique 103 d'un échantillon S dans lequel la voie d'analyse microscopique est une voie de spectroscopie, par exemple de spectroscopie Raman.

Le système d'analyse microscopique 103 comprend comme dans les exemples précédents un objectif de microscope 110 d'ouverture numérique ON nominale donnée dans un champ de vue donné, la voie d'analyse microscopique 140 qui est une voie de spectroscopie et la voie de visée 150.

Dans cet exemple, la voie de visée 150 peut être similaire à la voie de visée décrite en référence à la Fig. 1A, seule la voie d'analyse microscopique 140 étant différente.

La voie d'analyse microscopique 140 comprend une voie d'éclairage 120 comprenant dans cet exemple une source d'éclairage 121, une lentille ou miroir de renvoi cylindrique 122 (optionnel), un élément séparateur 141 (cube séparateur ou lame séparatrice) et un élément réfléchissant 142 (optionnel) configurés pour envoyer un faisceau d'éclairage émis par la source d'éclairage 121 vers l'objectif de microscope 110. La voie d'éclairage 120 comprend également dans cet exemple un dispositif de balayage 143 (optionnel) du faisceau d'éclairage configuré pour balayer le faisceau d'éclairage selon une ou deux dimensions, un élément séparateur 145 configuré pour séparer la voie de visée 150 et la voie d'analyse microscopique 140 et (optionnellement) une plateforme 111 solidaire de l'objectif de microscope 110 et configurée pour un déplacement axial 112 de l'objectif par rapport à l'échantillon.

La source d'éclairage 121 peut comprendre par exemple une source d'émission de lumière cohérente (spatialement), monochromatique et collimatée. Une source polychromatique peut également être utilisée, par exemple en microspectroscopie en réflexion diffuse. Des optiques et/ou filtres spatiaux (non représentés) peuvent rendre la source collimatée et/ou cohérente et/ou monochromatique. La longueur d'onde de la source est fonction de l'application. En microspectroscopie Raman par exemple, appliqué à l'imagerie de la peau, une longueur d'onde typique de la source d'éclairage peut être comprise entre environ 780 nm et environ 830 nm.

L'élément optique cylindrique 122 est optionnel et permet une microscopie avec éclairage selon une ligne (« *line-field»).*

La voie de détection 130 de la voie d'analyse microscopique est configurée pour détecter un faisceau lumineux émis par l'échantillon en réponse audit éclairage de l'échantillon, selon un motif de détection donné, mais diffère de la voie de détection de la voie d'analyse microscopique illustrée sur la Fig. 1A ou sur la Fig. 1B. Notamment, la voie de détection comprend, en plus de l'objectif de microscope 110, du dispositif de balayage 143 (optionnel) et des éléments réfléchissants ou partiellement réfléchissants 145, 142, 141, un spectromètre. Le spectromètre comprend dans cet exemple et de façon connue, un élément de dispersion spectrale 132, par exemple un réseau, un objectif 133, et un détecteur 134, comprenant un capteur avec une aire de détection unidimensionnelle ou bidimensionnelle. Un capteur bidimensionnel permet, dans une configuration « *line-field* », de mesurer un spectre pour chaque point du motif de détection (mesure de plusieurs spectres en parallèle, chaque ligne du capteur 2D correspondant ainsi au spectre d'un point dans le motif de détection).

L'unité de traitement 160 reçoit, de façon connue, des signaux de détection générés par le détecteur 134 du spectromètre pour la reconstitution de signaux spectroscopiques en un ou plusieurs points de l'échantillon. L'unité de traitement 160 est connectée à un module d'affichage 170 configuré pour représenter l'image de visée et, sur l'image de visée, un élément d'image indiquant la position du motif de détection, comme cela sera illustré plus en détails par la suite. L'unité de traitement peut également être relié à une unité de stockage (non représenté) des images et/ou vidéos générées.

Une telle voie d'analyse microscopique 140 fonctionne donc comme une voie de spectroscopie connue de l'état de l'art. Bien qu'un exemple particulier soit représenté sur la Fig. 1C, l'homme du métier comprendra que le système d'analyse microscopique selon la présente description s'applique à tout montage connu de l'état de l'art pour la spectroscopie, et notamment la spectroscopie Raman, les éléments optomécaniques représentés sur la Fig. 1C pouvant être adaptés en conséquence.

Comme précédemment, en fonctionnement, la voie de visée 150 permet de générer une image de visée en réflexion de surface de l'échantillon S avec un champ plus important que le champ de vue de l'objectif de microscope. Par ailleurs, sur l'image de visée est représenté un élément d'image qui indique la position du motif de détection de la voie d'analyse microscopique, le motif de détection pouvant être un point, une ligne ou une surface. Il est ainsi possible pour un utilisateur, par exemple un praticien, de repérer avec précision le champ de l'analyse microscopique dans l'image de visée grand champ.

Dans chacun des exemples illustrés sur les Figs. 1A, 1B ou 1C, l'élément séparateur 145 configuré pour séparer la voie de visée 150 et la voie d'analyse microscopique 140 est agencé pour transmettre un faisceau émis par l'échantillon en réponse audit éclairage de l'échantillon par le dispositif d'éclairage 158 de la voie de visée vers le détecteur bidimensionnel 155 et réfléchir un faisceau émis par l'échantillon en réponse audit éclairage de l'échantillon par la voie d'éclairage 120 de la voie d'analyse microscopique vers la voie de détection 140. Bien entendu, il serait possible de faire travailler l'élément séparateur 145 en réflexion sur la voie de visée et en transmission sur la voie d'analyse microscopique. Par ailleurs, lorsque la voie d'analyse microscopique comprend un dispositif de balayage (143, Figs. 1A - 1C), l'élément séparateur de faisceaux peut faire partie du dispositif de balayage.

Que ce soit dans l'une ou dans l'autre des configurations, l'élément séparateur peut être configuré pour limiter la puissance lumineuse dans la voie de visée 150 de la lumière issue de la voie d'éclairage 120 de la voie d'analyse microscopique et réfléchie par l'échantillon. En effet, la lumière, issue par exemple d'une source laser, peut être puissante et de nature à éblouir la voie de visée. Ainsi il est possible d'utiliser un élément séparateur avec un coefficient de réflexion différent du coefficient de transmission (par exemple une lame de verre). Pour réduire la puissance lumineuse dans la voie de visée, il est également possible d'ajouter une densité optique dans la voie de visée 150 (en aval de l'élément séparateur 145).

Dans le cas où la bande spectrale de la source d'éclairage 121 de la voie d'éclairage 120 de la voie d'analyse microscopique est au moins partiellement différente de la bande spectrale du dispositif d'éclairage 158 de la voie de visée, l'élément séparateur pourra par ailleurs comprendre un élément dichroïque, par exemple une lame ou un cube dichroïque.

Il est également possible de prévoir des moyens de réduction de la puissance lumineuse dans la voie de visée, ces moyens de réduction de la puissance lumineuse pouvant contenir un élément de filtrage spectral lorsque la bande spectrale de la source d'éclairage 121 de la voie d'éclairage 120 de la voie d'analyse microscopique est au moins partiellement différente de la bande spectrale du dispositif d'éclairage 158 de la voie de visée.

Il est par ailleurs possible de ne pas activer les éclairages des voies de visée et d'analyse microscopique en continu, dans l'hypothèse où un éclairage d'une des voies pourrait gêner la détection sur l'autre voie.

Ainsi, en pratique, l'analyse microscopique de l'échantillon et la formation d'une image de visée peuvent être réalisées en continu. Cela est le cas lorsque l'élément d'image est directement l'image formée par le dispositif d'imagerie grand champ de la voie de visée du motif d'éclairage de la voie d'analyse microscopique. Cela peut également être le cas lorsque l'élément d'image est un élément graphique indiquant la position du motif de détection et que l'éclairage de la voie d'analyse microscopique ne perturbe pas la détection de la voie de visée, par exemple parce qu'il est très atténué dans la voie de visée, et réciproquement.

Dans d'autres exemples de réalisation, le procédé peut comprendre une première étape de formation d'une image de visée de l'échantillon avec l'éclairage de la voie d'analyse microscopique éteint, la détection d'une zone d'analyse d'intérêt dans l'image de visée de l'échantillon puis l'analyse microscopique de l'échantillon dans ladite zone d'intérêt, en déplaçant par exemple l'échantillon pour amener l'élément graphique préalablement calibré pour indiquer la zone de détection, au niveau de la zone d'analyse d'intérêt.

Cette configuration est intéressante dans le cas où l'éclairage de la voie d'analyse microscopique peut gêner la détection dans la voie de visée.

Dans certains cas, la voie de visée peut fonctionner en continu, aussi bien pour l'éclairage que pour l'acquisition, si l'éclairage de la voie de visée ne perturbe pas la détection de la voie d'analyse microscopique. Cela permet d'avoir une image de visée en continue même si elle est dégradée pendant le temps où l'éclairage de la voie d'analyse microscopique est activé.

Dans d'autres cas, l'éclairage de la voie de visée peut être éteint pendant l'analyse microscopique de l'échantillon, lorsque par exemple l'éclairage d'une voie perturbe la détection sur l'autre voie et qu'il n'est pas possible de maintenir simultanément les éclairages sur les deux voies pour avoir des résultats exploitables.

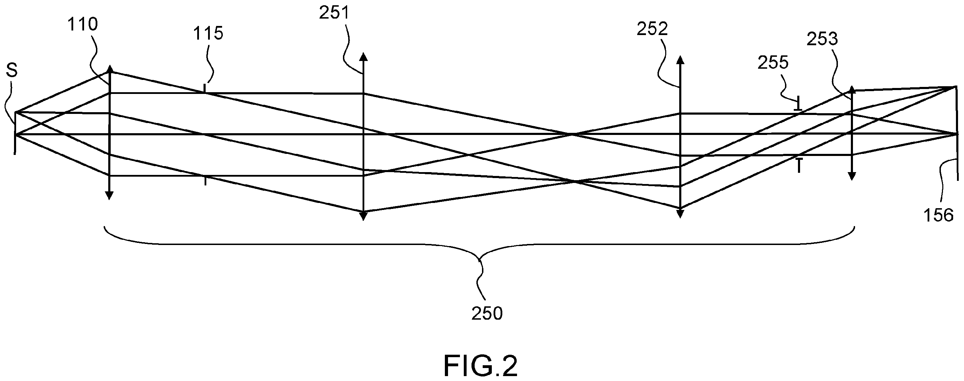

La Fig. 2 représente un schéma qui illustre, selon un exemple, une voie de visée d'un système d'analyse microscopique d'un échantillon selon la présente description. La voie de visée représentée sur la Fig. 2 est notamment configurée pour fonctionner avec n'importe lequel des systèmes représentés à titre d'exemples sur les Figs 1A, 1B ou 1C. Sur la Fig. 2, seule la partie détection de la voie de visée est représentée, l'éclairage pouvant comprendre, comme illustré sur les Figs. 1A à 1C, un ensemble de sources lumineuses agencées sur la partie distale de l'objectif de microscope, ou tout autre dispositif d'éclairage plein champ de l'échantillon S.

Comme cela est illustré sur la Fig. 2, la voie de visée comprend l'objectif de microscope 110 dont la pupille de sortie est indiquée par la référence 115 et un détecteur bidimensionnel représenté sur la Fig. 2 par une aire de détection 156 et un objectif 253. La voie de visée comprend en outre dans cet exemple une lentille de tube 251 et un oculaire 252. Ces éléments d'imagerie forment, avec l'objectif 253 et l'objectif de microscope 110, un dispositif d'imagerie plein champ 250 configuré pour conjuguer optiquement un champ effectif donné de l'échantillon englobant ledit champ de vue avec l'aire de détection 156 du détecteur bidimensionnel.

Ainsi, contrairement à certains systèmes connus de l'état de l'art et notamment la [Réf. 8] qui décrit une micro-caméra intégrée dans l'espace objet de l'objectif de microscope, la voie de visée selon la présente description, du fait qu'elle est déportée en dehors de l'espace objet, permet de former une image de visée en réflexion de surface d'un champ de l'échantillon, appelée champ effectif dans la présente description, qui englobe le champ de vue de l'objectif de microscope, l'image de visée pouvant avoir une très bonne qualité optique sans que l'encombrement au niveau de l'espace objet de l'objectif n'en soit affecté. Les dimensions du champ effectif sont limitées par le dispositif d'imagerie plein champ de la voie de visée. Le champ effectif peut être défini par un cercle de diamètre compris entre environ 2 mm et environ 5 mm.

Pour améliorer encore la qualité optique de l'image de visée, il est avantageux que le dispositif d'imagerie plein champ présente une ouverture numérique, mesurée dans l'espace objet de l'objectif de microscope, strictement inférieure à l'ouverture numérique nominale de l'objectif de microscope.

En effet, dans une voie classique d'analyse microscopique, il est connu d'utiliser un objectif de microscope à forte ouverture numérique (ON), par exemple une ON comprise entre environ 0,5 et environ 1,25. Cette ouverture numérique est garantie par le constructeur pour un champ nominal, appelé champ de vue dans la présente description, qui peut être compris entre environ 500 µm et environ 1,5 mm.

Cependant, du fait que l'objectif de microscope 110 n'est pas utilisé dans la voie de visée dans les conditions d'utilisation nominales, la résolution accessible au niveau de la voie de visée peut différer de celle annoncée au niveau des spécifications de l'objectif. En particulier, en utilisant l'objectif de microscope avec un champ effectif supérieur au champ de vue nominal, des aberrations et/ou du vignettage peuvent entacher la qualité de l'image. Afin d'obtenir une meilleure qualité d'image pour la voie de visée, on peut donc concevoir un dispositif d'imagerie plein champ qui présente une ouverture numérique strictement inférieure à l'ouverture numérique nominale de l'objectif de microscope, par exemple une ouverture numérique comprise entre environ 0,05 et 0,1.

Une originalité du système d'analyse microscopique selon la présente description est ainsi de pouvoir utiliser un même objectif de microscope dans deux voies optiques différentes, avec possiblement des ouvertures numériques différentes : dans la voie d'analyse microscopique dans lequel l'objectif de microscope est utilisé dans des conditions nominales (forte ouverture numérique, forte résolution et faible champ) et dans la voie de visée dans laquelle l'objectif de microscope est associé à d'autres éléments optiques pour former un dispositif d'imagerie plein champ qui présente éventuellement une ouverture numérique plus faible, par exemple aux environs de 0,08, une plus faible résolution et un grand champ. Le système d'analyse microscopique selon la présente description peut ainsi être vu comme deux microscopes fonctionnant en parallèle via un unique objectif de microscope.

En pratique, l'ouverture numérique du dispositif d'imagerie plein champ 250 de la voie de visée peut être limité en plaçant un diaphragme 255 dans la voie de visée, par exemple dans un plan sensiblement conjugué avec un plan de la pupille de sortie 115 de l'objectif de microscope.

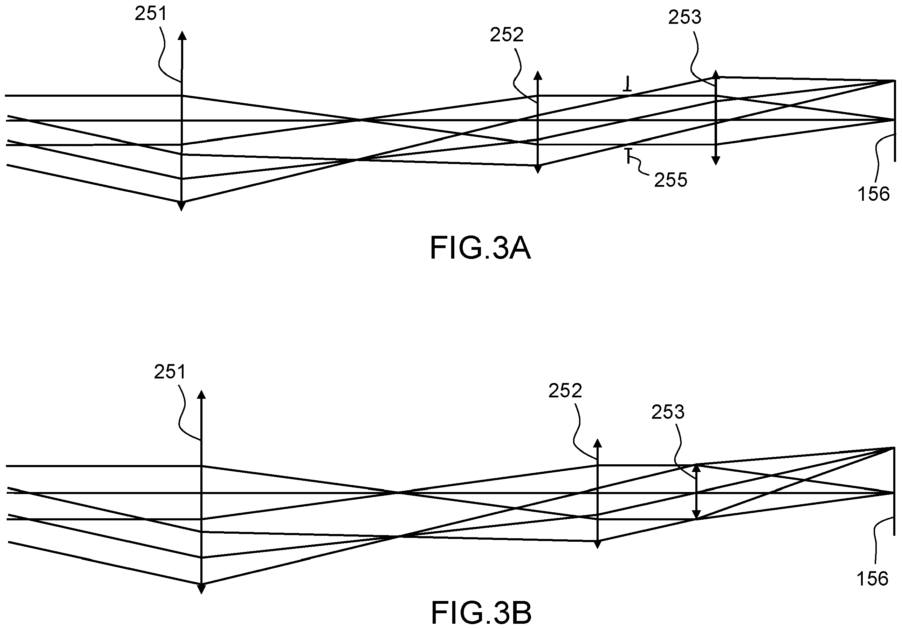

Les Figs. 3A et 3B illustrent ainsi deux exemples pour la réduction de l'ouverture numérique du dispositif d'imagerie plein champ 250. Dans ces exemples, l'objectif de microscope 110 n'est pas représenté.

La Fig. 3A représente un schéma illustrant un premier exemple dans lequel la voie de visée comprend un diaphragme 255 permettant de limiter l'ouverture numérique du dispositif d'imagerie plein champ.

La Fig. 3B représente un schéma illustrant un deuxième exemple dans lequel l'ouverture numérique du dispositif d'imagerie plein champ 250 de la voie de visée est limitée par un des éléments optiques du dispositif d'imagerie plein champ, dans cet exemple l'objectif 253 de la caméra. Cette configuration est particulièrement intéressante car elle permet de réduire l'encombrement du dispositif d'imagerie plein champ 250 et d'obtenir ainsi une voie de visée très compacte. Bien entendu, l'ouverture numérique du dispositif d'imagerie plein champ 250 de la voie de visée pourrait être limitée par un autre des éléments optiques du dispositif d'imagerie plein champ, par exemple l'oculaire 252.

On notera qu'il n'est pas indispensable que le diaphragme (255, Fig. 3A ou 253, Fig. 3B) soit parfaitement conjugué du plan de la pupille de l'objectif de microscope. Cependant, si le plan du diaphragme est sensiblement conjugué avec le plan de la pupille de sortie de l'objectif de microscope (comme cela est illustré par exemple sur la Fig. 2), cela permet de ne pas perdre la propriété de télécentricité de l'objectif de microscope et d'éviter que des rayons ne soient vignettés au sein de l'objectif de microscope 110.

Par ailleurs, le dispositif d'imagerie plein champ 250 illustre un exemple de conception de la voie de visée mais d'autres exemples sont possibles. Par exemple, le dispositif d'imagerie plein champ 250 de la voie de visée pourrait ne pas comprendre d'oculaire 252 l'objectif de caméra 253 imageant une distance finie, ou l'oculaire 252 pourrait de pas renvoyer les rayons à l'infini. Dans tous les cas, comme expliqué ci-dessus, il est avantageux de réduire l'ouverture numérique (ON) du dispositif 250, dans l'espace objet de l'objectif de microscope, par rapport à l'ON nominale de l'objectif de microscope, que ce soit au moyen d'un diaphragme ajouté dans la voie de visée ou au moyen d'un des éléments optiques de la voie de visée configuré pour former un diaphragme Par ailleurs, le dispositif d'imagerie plein champ de la voie de visée peut également être ajustable en focalisation. Cela rend possible la formation d'une image de visée en réflexion de surface de l'échantillon même lorsque la voie d'analyse microscopique est configurée pour former une image en profondeur dans l'échantillon (cas de l'imagerie OCM telle qu'illustrée sur la Fig. 1B par exemple).

En effet, lorsque la voie d'analyse microscopique est une voie LC-OCT par exemple, l'objectif de microscope 110 est amené à être translaté verticalement, c'est-à-dire selon son axe optique. La translation peut être dynamique dans un mode de balayage vertical de la ligne d'éclairage (obtention de B-Scans), c'est-à-dire selon une direction parallèle à l'axe optique de l'objectif de microscope, ou contrôlée par l'utilisateur dans un mode de balayage horizontal de la ligne d'éclairage, c'est-à-dire selon une direction contenue dans un plan perpendiculaire à l'axe optique de l'objectif de microscope (Obtention de C-Scans). Dans la voie de visée cependant, on cherche à ce que l'objectif de microscope continue à imager la surface de l'échantillon, par exemple la surface de la peau, qui reste à la même position quand l'objectif de microscope est translaté. Afin de maintenir une qualité d'image optimale pour l'image de visée, il peut donc être utile de pouvoir modifier la focalisation du dispositif d'imagerie grand champ 250 de la voie de visée afin de maintenir une conjugaison optique entre la surface de l'échantillon S et l'aire de détection 156 (Fig. 2).

Pour ce faire, il est possible de prévoir pour l'un des éléments optiques, par exemple l'objectif 253, une lentille à focale variable ou de prévoir que cet objectif puisse être déplacé par exemple à l'aide d'un moteur piézoélectrique, l'aire de détection étant maintenue fixe. En pratique, l'ajustement de la focalisation peut être automatique (autofocus), ce qui permet de limiter les réglages qui doivent être fait par l'utilisateur.

Cependant, lorsque l'échantillon est la peau par exemple, il n'y a pas toujours des structures assez nettes pour effectuer l'autofocus de façon efficace. Une autre possibilité est alors de calibrer la focalisation ajustable du dispositif d'imagerie grand champ 250 de la voie de visée de manière à associer la bonne position de focalisation à chaque position de l'objectif de microscope au sein de sa course.

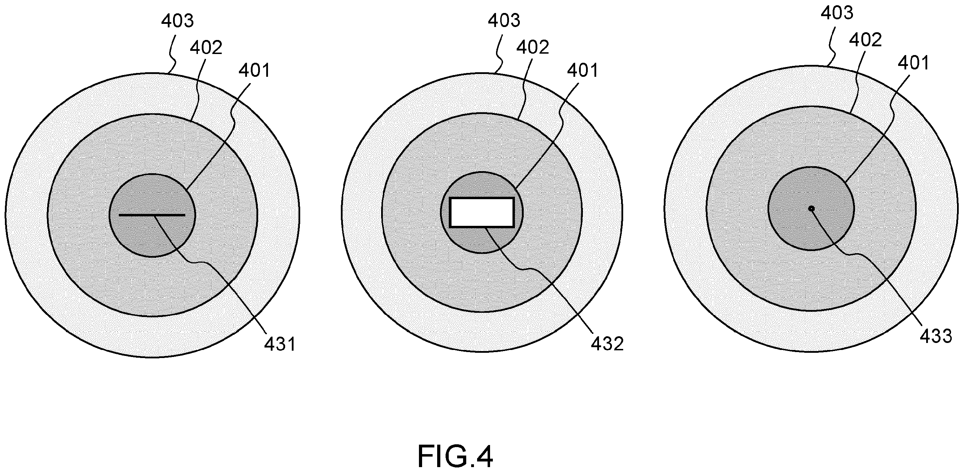

La Fig. 4 représente à titre d'illustration différents exemples montrant le champ de vue 401 de l'objectif de microscope 110, pour lequel une ouverture numérique nominale est garantie par le constructeur, le champ effectif 402 de la voie de visée et un champ total 403 de l'objectif de microscope. Le champ total de l'objectif de microscope est une région d'un plan focal de l'objectif de microscope comprenant l'ensemble des points à partir desquels un rayon lumineux peut-être collecté par l'objectif. En pratique, le champ effectif 402 est choisi suffisamment grand pour obtenir une image de visée grand champ mais plus faible que le champ total pour garder une image de visée de qualité optique suffisante.

Sur ces trois exemples sont représentés trois motifs de détection de la voie d'analyse microscopique, à savoir une ligne 431, une surface 432, un point 433. Dans tous les cas, le motif de détection est compris dans le champ de vue de l'objectif de microscope.

Un procédé d'analyse microscopique selon la présente description peut être mis en oeuvre au moyen d'un système d'analyse microscopique tel que décrit par exemple et de façon non limitative, au moyen d'un des systèmes 101, 102, 103 décrits en référence aux Figs 1A, 1B, 1C respectivement.

Le procédé comprend l'analyse microscopique de l'échantillon S, par exemple un tissu biologique comme la peau, au moyen d'une voie d'analyse microscopique 140 telle que décrite par exemple en référence aux Figs. 1A, 1B ou 1C et la formation d'une image de visée de l'échantillon au moyen d'une voie de visée 150 telle que décrite par exemple en référence aux Figs 1A - 1C et aux Figs 2, 3A - 3B ci-dessus. L'image de visée est une image en réflexion d'un champ effectif 402 (Fig. 4) de l'échantillon comprenant le champ de vue 401, comme expliqué ci-dessus.

Le procédé d'analyse microscopique selon la présente description comprend en outre l'affichage sur l'image de visée d'un élément d'image indiquant la position du motif de détection (par exemple un motif de détection 431, 432 ou 433 tel qu'illustré sur la Fig. 4). Dans des exemples de réalisation d'un procédé selon la présente description, l'élément d'image peut-être directement l'image formé par le dispositif d'imagerie grand champ de la voie de visée du motif d'éclairage formé sur l'échantillon par la voie d'éclairage 120 de la voie d'analyse microscopique 140 (voir Figs 1A, 1B, 1C).

Cependant, dans certains exemples de réalisation, l'élément d'image peut être un élément graphique indiquant la position du motif de détection et déterminé au moyen d'une étape de calibration préalable.

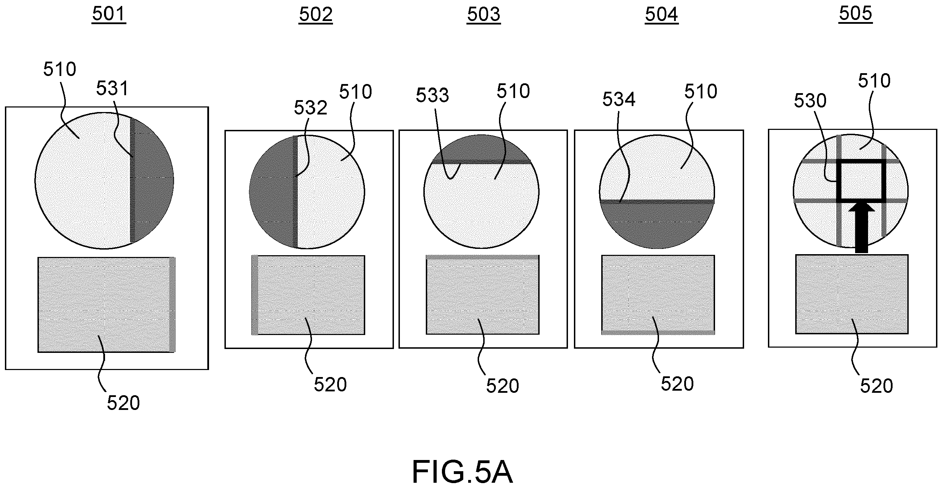

Cette configuration est particulièrement avantageuse notamment lorsque le motif d'éclairage n'est pas détecté par le détecteur de la voie de visée, soit par exemple parce que le détecteur de la voie de visée n'est pas sensible dans la bande spectrale de la source d'éclairage de la voie d'analyse microscopique, soit parce qu'on coupe la première bande spectrale dans la voie de visée pour limiter un éblouissement. Cette configuration est également avantageuse lorsque le motif d' éclairage est difficilement identifiable dans l'image de visée, ou si le motif de détection est sensiblement différent du motif d'éclairage. La Fig. 5A représente ainsi des schémas illustrant, selon un premier exemple de réalisation appliqué à l'imagerie microscopique, des étapes de calibration pour déterminer, pour ledit élément d'image, un élément graphique indiquant la position du motif de détection de la voie d'imagerie microscopique, dans cet exemple un motif de détection formé d'une surface rectangulaire. La méthode de calibration est mise en oeuvre avec un échantillon de calibration qui présente un bord net, par exemple le bord d'une lame de verre coupée « à angle droit », ou le bord d'un motif imprimé par photolithographie sur une lame de verre. Dans une première étape 501, on procède à l'acquisition d'une image de visée 510 de l'échantillon de calibration et d'une image microscopique 520 *en face* de telle sorte qu'un bord net de l'échantillon visible sur l'image de visée soit visible sur un bord de l'image microscopique 520, dans cet exemple un bord droit. On enregistre alors la ligne 531 de l'image de visée comme étant le bord droit de l'aire de détection de la voie d'analyse microscopique. Le procédé est renouvelé dans une deuxième étape 502 en bougeant l'échantillon pour que cette fois-ci le bord net de l'échantillon se trouve sur un autre côté de l'image microscopique, dans cet exemple le bord gauche. On enregistre de la même manière l'image 532 de l'image de visée comme étant le bord gauche de l'aire de détection de la voie d'analyse microscopique. Le procédé est renouvelé dans les étapes 503, 504 de la même manière, en bougeant à chaque fois l'échantillon pour faire apparaître le bord net sur un nouveau côté de l'image microscopique 520. On enregistre à chaque fois une ligne correspondante 534, 535, sur l'image de visée. Comme illustré sur le schéma 505, à partir des 4 lignes enregistrées sur l'image de visée, on peut reconstruire un élément graphique qui indique la position du motif de détection, dans cet exemple une surface rectangulaire qui pourra être matérialisée par un rectangle sur l'image de visée lors de l'acquisition d'une image microscopique. La calibration permet ainsi de repérer parfaitement le motif de détection de la voie d'analyse microscopique dans la voie de visée, et ce, indépendamment de l'échantillon analysé. La calibration peut être adaptée à un motif de détection ligne ou point.

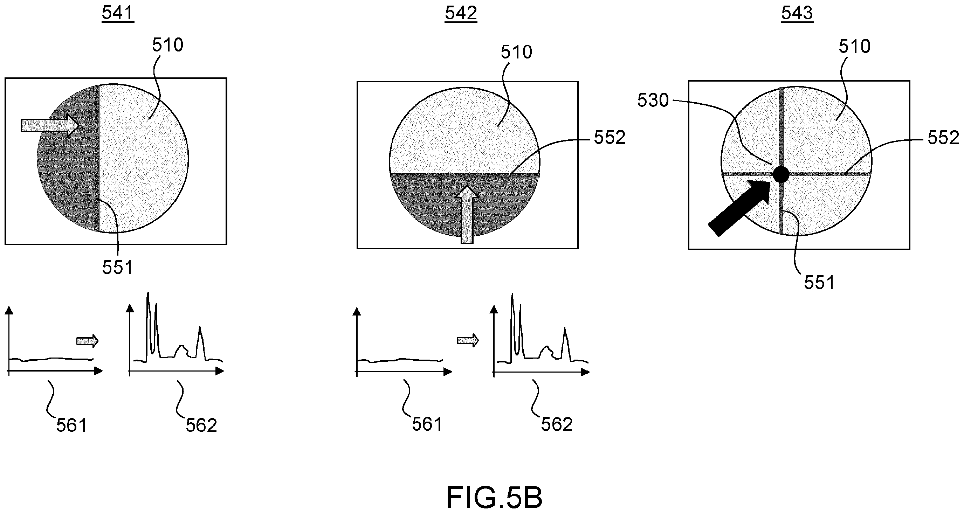

La Fig. 5B représente des schémas illustrant, selon un deuxième exemple appliqué à l'analyse spectroscopique, par exemple une analyse spectroscopique Raman, des étapes de calibration pour déterminer, pour ledit élément d'image, un élément graphique indiquant la position du motif de détection, dans cet exemple un point de détection.

Dans une première étape 541, on procède à l'acquisition d'une image de visée 510 de l'échantillon de calibration et on mesure en même temps un signal Raman (561). L'échantillon de référence est déplacé par exemple de la gauche vers la droite, jusqu'à observer un signal Raman fort (562). Cela correspond à un premier bord net de l'échantillon de calibration 551 que l'on enregistre. Le procédé est renouvelé dans une deuxième étape 542 en bougeant l'échantillon de calibration, par exemple du bas vers le haut, jusqu'à ce qu'à nouveau on voit apparaître un signal Raman fort (spectre 562). Cela correspond à un deuxième bord net de l'échantillon de calibration 552 que l'on enregistre. Comme illustré dans l'étape 543, à partir des deux droites 551, 552 enregistrées, on peut déterminer un élément graphique représentatif du motif de détection 530 (ici un disque centré sur le point de détection), et positionné à l'intersection des deux droites. On peut s'assurer de la précision de la calibration en renouvelant les étapes 541, 542 mais en allant par exemple de la droite vers la gauche puis du haut vers le bas. La calibration permet ainsi de repérer parfaitement le motif de détection de la voie d'analyse microscopique dans la voie de visée, et ce, indépendamment de l'échantillon analysé.

En pratique, un procédé pour l'analyse microscopique d'un échantillon, par exemple l'analyse de la peau d'un patient, peut être effectué de la manière suivante par un praticien, par exemple un dermatologue, en mettant en oeuvre les étapes d'un procédé selon la présente description.

Dans une première étape, un examen visuel de la peau est effectué. Des images cliniques (photos) peuvent être prises afin de localiser les structures « suspicieuses » à l'échelle du corps. S'ensuit un examen dermoscopique. Le dermatologue image la structure suspicieuse avec un système optique grossissant, par exemple un dermatoscope, qui optiquement correspond à une loupe, numérique ou non, avec un éclairage intégré. Le champ de vue du dermatoscope est typiquement de 1 à 3 cm. Des images dermoscopiques peuvent être enregistrées directement avec un dermatoscope numérique, ou à l'aide d'une appareil photo.

Si un doute subsiste lors de l'examen dermoscopique, le dermatologue procède à l'analyse microscopique de la peau, par exemple au moyen d'un système tel qu'illustré sur la Fig. 1B, par exemple avec une voie d'analyse microscopique de type LC-OCT. Le dermatologue positionne la tête de sonde manuelle (c'est-à-dire la partie du système en contact avec la peau pour l'imagerie) au plus proche de la structure suspicieuse. Il déplace ensuite l'ensemble de la sonde (tout en restant en contact avec la peau) jusqu'à localiser précisément la lésion précédemment identifiée en dermoscopie, en se guidant grâce à la voie de visée.

Une fois que la structure est identifiée sur l'image de visée, le dermatologue procède à l'analyse de la peau à l'échelle cellulaire et en profondeur grâce à la voie d'analyse microscopique LC-OCT.

L'examen débute par exemple avec le mode d'imagerie en coupe verticale (B-Scan), qui donne directement accès à toute la profondeur de la structure. Grâce à l'élément d'image affiché sur l'image macro indiquant la position du motif de détection (une ligne dans le cas du mode d'imagerie en coupe), le praticien sait parfaitement à quel niveau dans la structure il est en train d'observer une coupe verticale à l'échelle cellulaire.

Le dermatologue peut aussi s'intéresser à l'image LC-OCT afin de rechercher des marqueurs pathologiques à l'échelle cellulaire/en profondeur dans la peau, afin d'enrichir les informations déjà obtenues en dermoscopie. A cette étape, on pourra se déplacer dans la structure afin de rechercher ces marqueurs pathologiques, ou de les étudier.

Ce déplacement peut se faire de deux manières. Latéralement grâce au dispositif de balayage (143, Fig. 1B) présent dans le dispositif, qui permet de scanner le motif de détection. L'amplitude de ce balayage est assez faible (~ 500 µm), et dans une seule direction. La deuxième manière est de déplacer l'ensemble de la sonde ou la peau sous la sonde. Ce déplacement sera a priori moins fin (sa précision dépendra du contrôle qu'arrive à avoir l'utilisateur), mais le dermatologue aura autant d'amplitude qu'il souhaite pour viser n'importe quelle zone en LC-OCT. Pour ce type de déplacement, l'image de visée est importante car elle permet au dermatologue de s'assurer qu'il reste toujours bien au niveau de la structure au cours de son action pour déplacer la sonde ou la peau.

Une fois les marqueurs identifiés en LC-OCT, plusieurs options sont possibles. Le dermatologue peut passer en mode coupe horizontale (C-Scan ou *en face*) pour enrichir sa compréhension de la structure (avec la même approche pour naviguer dans la structure qu'en mode coupe verticale).

Il est également possible d'acquérir des informations dans un volume de l'échantillon pour étudier les marqueurs pathologiques en 3D sur une zone d'intérêt. Suite à l'acquisition d'un (ou plusieurs) volume(s), le dermatologue peut arrêter le système d'acquisition, et étudier les volumes acquis pour analyse. A noter que l'enregistrement d'un volume est accompagné de l'enregistrement d'un certain nombre d'images de visée acquises durant l'acquisition 3D (de mêmes, l'enregistrement de toute image/vidéo s'accompagne de l'enregistrement de l'image/vidéo de visée associée). Plusieurs images de visée sont enregistrées durant une acquisition 3D au cas où le praticien aurait bougé durant l'acquisition (les acquisitions 3D pouvant être relativement longues).

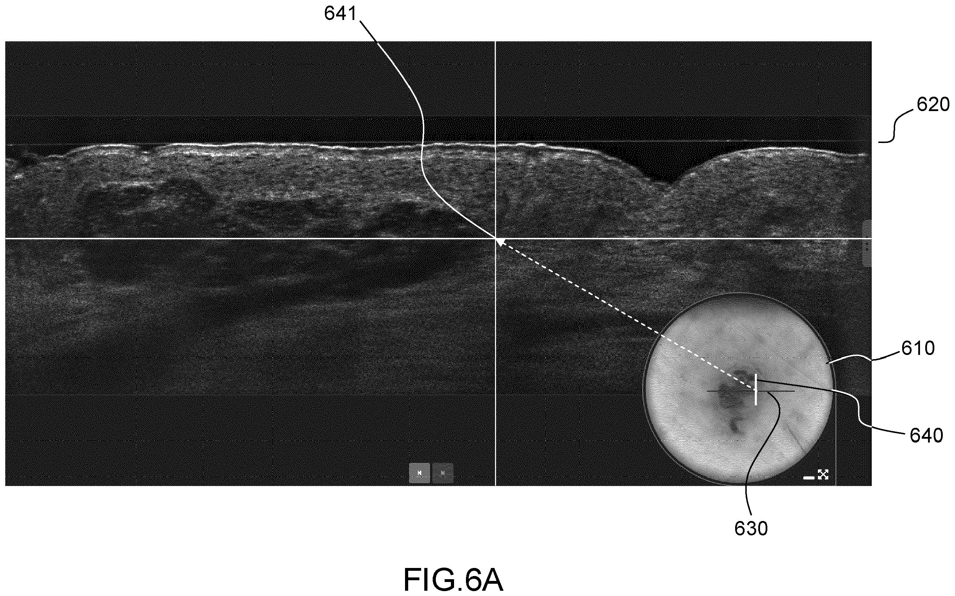

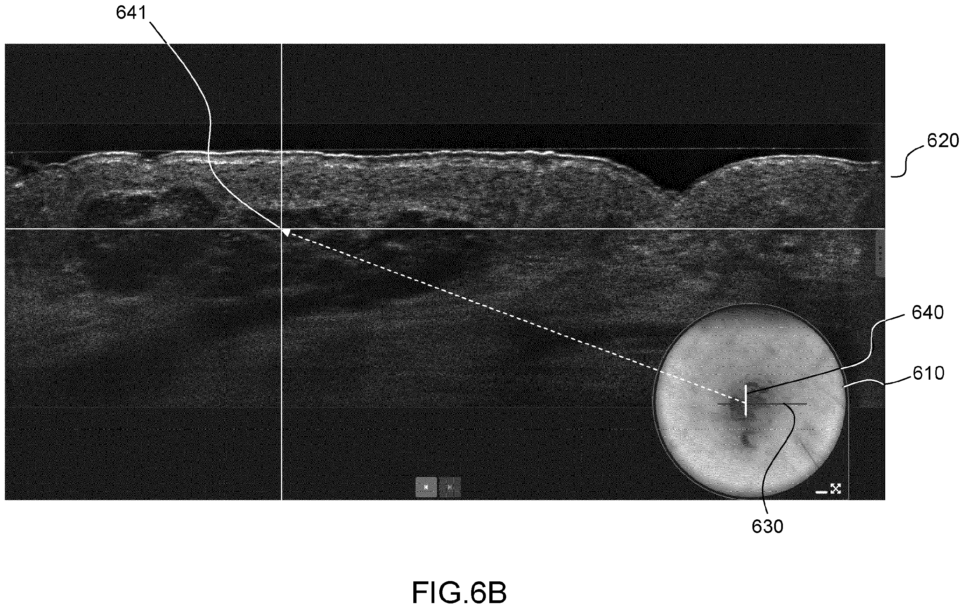

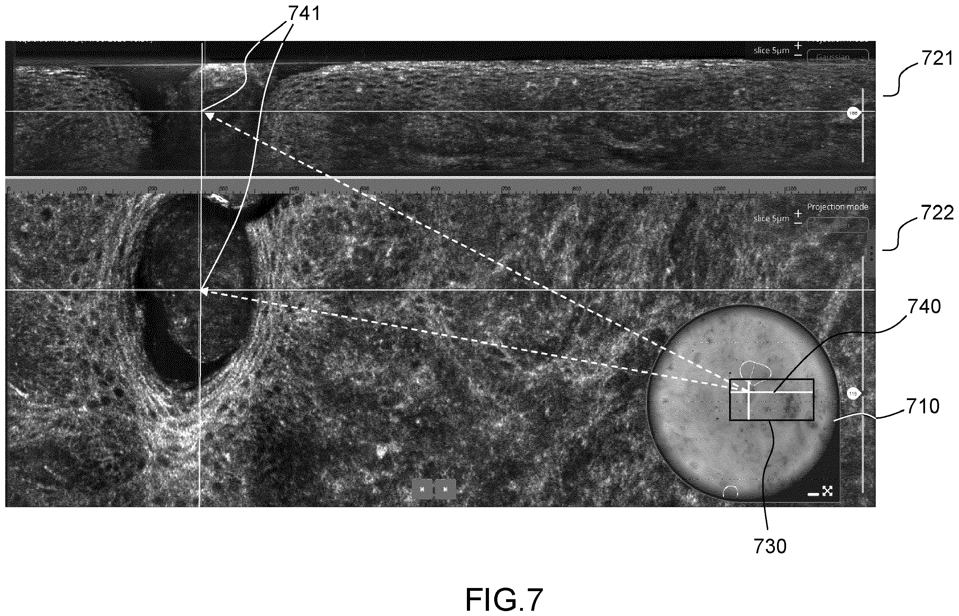

Les Figs. 6A, 6B et 7 représentent des images illustrant des exemples d'images de visée et d'images microscopiques B-Scans et C-Scans enregistrées durant une acquisition d'un volume au moyen d'un procédé selon la présente description.

Dans ces exemples, la voie d'analyse microscopique est une voie d'analyse de type LC-OCT, tel que représentée par exemple sur la Fig. 1B, configurée pour l'acquisition d'images 3D. Pour l'obtention de ces images, la source utilisée (121, Fig. 1B) est un laser supercontinuum filtré par une fibre optique pour une émission autour d'environ 800 nm et collimatée par un miroir parabolique hors axe. L'objectif de microscope 110 est un objectif à immersion dans de l'huile de silicone avec un grandissement 20x et une ouverture numérique ON = 0,5. Une lentille cylindrique 122 de focale 50 mm permet une illumination selon une ligne de ~ 1.5 mm x 1.5 µm au niveau de la peau, avec une puissance de ~ 10 mW. Un scanner galvanométrique (143, Fig. 1B) est utilisé pour un balayage latéral de la ligne d'éclairage. Le miroir de renvoi 142 est monté sur un actuateur piézoélectrique pour la modulation des interférences pour la génération des images C-scans. Un objectif de microscope 133 identique à l'objectif 110 est utilisé dans le bras référence pour compensation de la dispersion. La surface de référence 135 de l'interféromètre est une interface air/verre d'une lame de verre en silice fondue. La lentille de tube 131 présente une focale de 150 mm et le détecteur 138 comprend une caméra linéaire CMOS. Une lame séparatrice 90 :10 (145) est monté sur le dispositif de balayage 143 pour séparer les voies microscopique et voie de visée. La voie de visée 150 comprend une caméra 155 équipée d'une optique miniature de quelques mm, faisant office de diaphragme, tel que décrit sur la figure 3B. La caméra est équipée d'un ajustement du focus/autofocus.

Les Figs. 6A et 6B illustrent ainsi à titre d'exemple une image B-Scan 620 affichée avec une image de visée 610. Sur l'image de visée 610, l'élément graphique 630 indique la position du motif de détection (ligne) de la voie d'analyse microscopique. L'élément graphique est déterminé grâce à une calibration préalable telle que décrite par exemple en référence à la Fig. 5A.

Un marqueur 640 peut en outre être superposé à l'image de visée 610 pour repérer un point sur l'élément graphique, ou plus généralement sur l'élément d'image, de manière à permettre à un utilisateur de cibler un point dans l'image B-scan 620 et de visualiser la position du point ainsi ciblé au niveau de la surface de l'échantillon sur l'image de visée. Par exemple, le point ciblé dans l'image 620 est indiqué par un réticule 641. Le marqueur est calibré pour se positionner au niveau correspondant à la position du point ciblé via le réticule, projetée sur la surface de l'échantillon. De façon analogue, il est possible de laisser la possibilité à l'utilisateur de cibler un point dans l'image de visée, au sein du motif de détection, directement via le marqueur 640, de façon à visualiser à quelle position correspond un point du motif de détection au sein de l'image B-scan (repéré dans ce cas par l'axe vertical du réticule).

La Fig. 6B illustre la même image avec déplacement du marqueur 640 et du réticule 641, l'utilisateur pouvant soit déplacer le réticule 641 pour voir se repositionner le marqueur sur l'image de visée 610, soit déplacer le marqueur 640 pour voir se repositionner le réticule sur l'image B-Scan 620.

La fig. 7 illustre 2 images extraites d'un volume, à savoir une image B-Scan 721 et une image C-Scan 722. L'image de visée 710 est affichée en même temps avec un motif de détection 730 correspondant à une surface de détection du C-Scan.

Tout comme dans le cas de l'image B-scan (Fig. 6A et FIG. 6B), un marqueur 740 peut être superposé sur l'élément graphique de l'image de visée, ou plus généralement sur l'élément d'image. Le marqueur est calibré de manière à pouvoir associer un point du volume, repéré ici par un réticule 741, à un point du motif de détection repéré par le marqueur, au niveau de la surface de l'échantillon. L'utilisateur peut alors cibler un point via le marqueur 740, respectivement via le réticule 741, de manière à visualiser à quelle position correspond un point du volume projeté à la surface de l'échantillon, au sein du motif de détection, respectivement à quelle position correspond un point du motif de détection au sein du volume, repéré dans ce cas par les axes du réticule visualisables dans les images C-scans extraite du volume.

Comme illustré sur ces images, le procédé selon la présente description permet au praticien de repérer avec précision le champ de l'analyse microscopique (dans cet exemple B-Scans et C-Scans) dans l'image de visée qui présente une qualité d'image proche de la qualité d'une image dermoscopique.

Bien que décrite à travers un certain nombre d'exemples de réalisation, le procédé et le système d'analyse microscopique selon la présente description comprend différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### Références

Réf. 1: M. Raj adhyaksha et al, « In vivo confocal scanning laser microscopy of human skin II: Advances in instrumentationand comparison with histology », J Invest Dermatol, 1999.
Réf 2: K. König et al, "High-resolution multiphoton tomography of human skin with subcellular spatial resolution andpicosecond time resolution," J. Biomed. Opt. 8, 432-439 (2003).
Réf. 3: Schmitt et al., "Subsurface Imaging of Living Skin with Optical Cohérence Microscopy", Dermatology 1995;191:93-98.
Réf. 4: Demande de brevet publiée WO2015092019.
Réf 5: Y. Chen et al. « High-resolution line-scanning optical cohérence microscopy", Optics Letters, Vol. 32, N°14, 1971 - 1973 (2007).
Réf 6: J. Schleusener et al., "Raman spectroscopyfor the discrimination of cancerous and normal skin", Photon Lasers Med (2015).
Réf 7: E. Drakaki et al. "Spectroscopie methods for the photodiagnosis of nonmelanoma skincancer", Journal of Biomédical Optics 18(6), 061221 (June 2013).
Réf 8: Demande de brevet publiée WO2017139712.
Réf. 9: Brevet délivré US7864996.
Réf 10: Z. Wu et al. " Précisé in vivo tissue micro-Raman spectroscopy with simultaneous réflectance confocal microscopy monitoring using a single laser", Vol. 44, No. 6 / 15 March 2019 /Optics Letters.
Réf. 11 : E. Beaurepaire et al. "Full-field optical cohérence microscopy" Opt. Lett. 23, 244-246 (1998)

## Revendications

1. Système d'analyse microscopique (101 - 103) d'un échantillon (S) comprenant :
- une voie d'analyse microscopique (140) comprenant :
- un objectif de microscope (110) d'ouverture numérique (ON) nominale donnée dans un champ de vue (401) donné;
- une voie d'éclairage (120) configurée pour éclairer l'échantillon à travers l'objectif de microscope selon un premier motif d'éclairage et dans une première bande spectrale;
- une voie de détection (130) comprenant ledit objectif de microscope, ladite voie de détection étant configurée pour détecter dans ledit champ de vue et selon un motif de détection (431 - 433), un faisceau lumineux émis par l'échantillon en réponse audit éclairage de l'échantillon et générer un signal de détection;
- une unité de traitement (160) configurée pour générer une information d'analyse microscopique de l'échantillon à partir dudit signal de détection ;
- une voie de visée (150) comprenant :
- ledit objectif de microscope (110) ;
- un dispositif d'éclairage plein champ (158) configuré pour éclairer l'échantillon dans une deuxième bande spectrale ;
- un détecteur bidimensionnel (155);
- un ou plusieurs éléments d'imagerie (251 - 253) formant, avec ledit objectif de microscope (110), un dispositif d'imagerie plein champ (250) configuré pour conjuguer optiquement un champ effectif donné de l'échantillon englobant ledit champ de vue avec une aire de détection (156) du détecteur bidimensionnel (155), et former une image de visée en réflexion de surface dudit champ effectif;
- un élément séparateur de faisceaux (145) agencé en amont de l'objectif de microscope pour séparer la voie d'analyse et la voie de visée ;
- un module d'affichage (170) configuré pour représenter ladite image de visée et, sur ladite image de visée, un élément d'image (530) indiquant la position dudit motif de détection.

2. Système d'analyse d'un échantillon selon la revendication 1, dans lequel le dispositif d'imagerie plein champ présente, dans l'espace objet de l'objectif de microscope, une ouverture numérique strictement inférieure à l'ouverture numérique nominale de l'objectif de microscope.

3. Système d'analyse d'un échantillon selon la revendication 2, dans lequel ladite voie de visée comprend en outre un diaphragme (255) permettant de limiter ladite ouverture numérique du dispositif d'imagerie plein champ.

4. Système d'analyse d'un échantillon selon l'une quelconque des revendications précédentes, dans lequel le dispositif d'imagerie plein champ de ladite voie de visée est ajustable en focalisation.

5. Système d'analyse d'un échantillon selon l'une quelconque des revendications précédentes, dans lequel le dispositif d'éclairage plein champ de la voie de visée comprend une pluralité de sources lumineuses (158) agencées sur une périphérie d'une face distale de l'objectif de microscope.

6. Système d'analyse d'un échantillon selon l'une quelconque des revendications précédentes, dans lequel ladite deuxième bande spectrale diffère au moins partiellement de ladite première bande spectrale et ladite voie de visée comprend des moyens de réduction de la puissance lumineuse au moins dans ladite première bande spectrale.

7. Système d'analyse d'un échantillon selon l'une quelconque des revendications précédentes, dans lequel ladite deuxième bande spectrale diffère au moins partiellement de ladite première bande spectrale et ledit élément séparateur de faisceaux comprend une élément dichroïque configuré pour séparer les faisceaux dans chacune desdites première et deuxième bandes spectrales.

8. Système d'analyse d'un échantillon selon l'une quelconque des revendications précédentes, dans lequel ledit élément d'image indiquant la position dudit motif de détection comprend un élément graphique déterminé au moyen d'une calibration préalable.

9. Système d'analyse d'un échantillon selon l'une quelconque des revendications précédentes, dans lequel ladite voie d'analyse microscopique est une voie d'imagerie confocale et/ou d'imagerie tomographique par cohérence optique et ladite information d'analyse microscopique de l'échantillon comprend au moins une image de l'échantillon.

10. Système d'analyse d'un échantillon selon l'une quelconque des revendications 1 à 8, dans lequel ladite voie d'analyse microscopique est une voie d'analyse spectroscopique et ladite information d'analyse microscopique de l'échantillon comprend au moins un spectre dudit faisceau lumineux émis par l'échantillon en au moins un point de l'échantillon.

11. Procédé d'analyse d'un échantillon (S), comprenant :
- une analyse microscopique de l'échantillon au moyen d'une voie d'analyse microscopique comprenant un objectif de microscope (110) d'ouverture numérique (ON) nominale donnée dans un champ de vue (401) donné, ladite analyse microscopique comprenant :
- l'éclairage de l'échantillon à travers l'objectif de microscope selon un premier motif d'éclairage donné (431 - 433) et dans une première bande spectrale;
- la détection dans ledit champ de vue et selon un motif de détection, d'un faisceau lumineux émis pas l'échantillon en réponse audit éclairage de l'échantillon pour former un signal de détection;
- le traitement dudit signal de détection pour générer une information d'analyse microscopique de l'échantillon ;
- la formation d'une image de visée en réflexion de surface d'un champ effectif donné de l'échantillon englobant ledit champ de vue, au moyen d'une voie de visée (150) comprenant ledit objectif de microscope, un détecteur bidimensionnel (155), un ou plusieurs éléments d'imagerie configuré(s) pour former avec ledit objectif de microscope un dispositif d'imagerie plein champ (250), la formation de l'image de visée comprenant :
- l'éclairage plein champ de l'échantillon dans une deuxième bande spectrale ;
- la conjugaison optique du champ effectif de l'échantillon avec une aire de détection (156) du détecteur bidimensionnel (155), au moyen dudit dispositif d'imagerie plein champ, pour former ladite image de visée;
- l'affichage de ladite image de visée et, sur ladite image de visée, l'affichage d'un élément d'image (530) indiquant la position dudit motif de détection.

12. Procédé d'analyse d'un échantillon selon la revendication 11, dans lequel l'analyse microscopique de l'échantillon et la formation d'une image de visée sont réalisées en continu.

13. Procédé d'analyse d'un échantillon selon la revendication 11, comprenant :
- une première étape de formation d'une image de visée de l'échantillon sans éclairage de la voie d'analyse microscopique,
- la détection d'une zone d'analyse d'intérêt dans l'image de visée de l'échantillon et
- l'analyse microscopique dudit échantillon dans ladite zone d'intérêt.

14. Procédé d'analyse d'un échantillon selon la revendication 13, dans lequel l'éclairage de la voie de visée est éteint pendant l'analyse microscopique de l'échantillon.

15. Procédé d'analyse d'un échantillon selon l'une quelconque des revendications 11 à 14, dans lequel l'analyse microscopique de l'échantillon comprend une imagerie confocale et/ou tomographique par cohérence optique de l'échantillon.

16. Procédé d'analyse d'un échantillon selon la revendication 15, dans lequel l'analyse microscopique de l'échantillon comprend la formation d'images de type B-Scan avec une cadence d'imagerie donnée et ladite cadence d'imagerie est synchronisée avec une cadence d'acquisition des images de visée.

17. Procédé d'analyse d'un échantillon selon l'une quelconque des revendications 11 à 14, dans lequel l'analyse microscopique de l'échantillon comprend une analyse spectroscopique de l'échantillon.

18. Procédé d'analyse d'un échantillon selon l'une quelconque des revendications 11 à 17, comprenant une étape de calibration préalable permettant de déterminer pour ledit élément d'image, un élément graphique indiquant la position dudit motif de détection.

19. Procédé d'analyse d'un échantillon selon l'une quelconque des revendications 11 à 18, comprenant en outre l'affichage d'un marqueur (640, 740) superposé audit élément d'image de l'image de visée, ledit marqueur permettant à un utilisateur de cibler un point d'intérêt dans le motif de détection.

20. Procédé d'analyse d'un échantillon selon l'une quelconque des revendications 11 à 19, dans lequel l'échantillon est un tissu biologique, par exemple la peau.

## Patentansprüche

1. System zur mikroskopischen Analyse (101 - 103) einer Probe (S), aufweisend:
- eine mikroskopische Analysenstrecke (140) aufweisend:
- ein Mikroskopobjektiv (110) mit einer gegebenen nominalen numerischen Apertur (ON) in einem gegebenen Sichtfeld (401);
- eine Beleuchtungsstrecke (120), die so konfiguriert ist, dass sie die Probe durch das Mikroskopobjektiv in einem ersten Beleuchtungsmuster und in einem ersten Spektralband beleuchtet;
- eine Detektionsstrecke (130), die das Mikroskopobjektiv aufweisend, wobei die Detektionsstrecke so konfiguriert ist, dass sie in dem Sichtfeld und gemäß einem Detektionsmuster (431 - 433) einen Lichtstrahl erfasst, der von der Probe als Reaktion auf die Beleuchtung der Probe emittiert wird, und ein Detektionssignal erzeugt;
- eine Verarbeitungseinheit (160), die so konfiguriert ist, dass sie aus dem Detektionssignal eine mikroskopische Analyseinformation der Probe erzeugt;
- ein Zielpfad (150) aufweisend:
- das Mikroskopobjektiv (110);
- eine Vollfeldbeleuchtungsvorrichtung (158), die so konfiguriert ist, dass sie die Probe in einem zweiten Spektralband beleuchtet;
- einen zweidimensionalen Detektor (155);
- ein oder mehrere abbildende Elemente (251 - 253), die zusammen mit dem Mikroskopobjektiv (110) eine Vollfeldbildgebungsvorrichtung (250) bilden, die konfiguriert ist, um ein gegebenes effektives Feld der Probe, das das Sichtfeld umfasst, mit einem Erfassungsbereich (156) des zweidimensionalen Detektors (155) optisch zu konjugieren und ein Oberflächenreflexionszielbild des effektiven Felds zu bilden;
- ein Strahlteilerelement (145), das oberhalb des Mikroskopobjektivs angeordnet ist, um die mikroskopische Analysenstrecke und den Zielpfad zu trennen;
- ein Anzeigemodul (170), das so konfiguriert ist, dass es das Zielbild und auf dem Zielbild ein Bildelement (530) darstellt, das die Position des Detektionsmusters anzeigt.

2. System zur Analyse einer Probe nach Anspruch 1, wobei die Vollfeldbildgebungsvorrichtung im Objektraum des Mikroskopobjektivs eine numerische Apertur aufweist, die strikt kleiner ist als die nominale numerische Apertur des Mikroskopobj ektivs.

3. System zur Analyse einer Probe nach Anspruch 2, wobei der Zielpfad außerdem eine Blende (255) aufweist, mit der die numerische Apertur der Vollfeldbildgebungsvorrichtung begrenzbar ist.

4. System zur Analyse einer Probe nach einem der vorhergehenden Ansprüche, wobei die Vollfeldbildgebungsvorrichtung des Zielpfades in der Fokussierung einstellbar ist.

5. System zur Analyse einer Probe nach einem der vorhergehenden Ansprüche, wobei die Vollfeldbeleuchtungsvorrichtung des Zielpfades eine Vielzahl von Lichtquellen (158) aufweist, die an einem Umfang einer distalen Fläche des Mikroskopobjektivs angeordnet sind.

6. System zur Analyse einer Probe nach einem der vorhergehenden Ansprüche, wobei sich das zweite Spektralband zumindest teilweise von dem ersten Spektralband unterscheidet und der Zielpfad Mittel zur Reduzierung der Lichtleistung zumindest in dem ersten Spektralband aufweist.

7. System zur Analyse einer Probe nach einem der vorhergehenden Ansprüche, wobei das zweite Spektralband sich zumindest teilweise von dem ersten Spektralband unterscheidet und das Strahlteilerelement ein dichroitisches Element aufweist, das konfiguriert ist, um Strahlen in jedem der ersten und zweiten Spektralbänder zu trennen.

8. System zur Analyse einer Probe nach einem der vorhergehenden Ansprüche, wobei das Bildelement, das die Position des Detektionsmusters anzeigt, ein grafisches Element aufweist, das mittels einer vorherigen Kalibrierung bestimmt wurde.

9. System zur Analyse einer Probe nach einem der vorhergehenden Ansprüche, wobei die mikroskopische Analysenstrecke eine konfokale Bildgebung und/oder eine tomographische Bildgebung mittels optischer Kohärenz ist und die mikroskopische Analyseninformation der Probe mindestens ein Bild der Probe aufweist.

10. System zur Analyse einer Probe nach einem der Ansprüche 1 bis 8, wobei die mikroskopische Analysenstrecke eine spektroskopische Analysenstrecke ist und die mikroskopische Analyseinformation der Probe mindestens ein Spektrum des Lichtstrahls aufweist, der von der Probe an mindestens einem Punkt der Probe emittiert wird.

11. Verfahren zur Analyse einer Probe (S), das folgende Schritte aufweist:
- Mikroskopische Analyse der Probe mittels einer mikroskopischen Analysenstrecke, die ein Mikroskopobjektiv (110) mit einer gegebenen nominalen numerischen Apertur (ON) in einem gegebenen Sichtfeld (401) aufweist, wobei die mikroskopische Analyse folgende Schritte aufweist:
- Beleuchtung der Probe durch das Mikroskopobjektiv in einem gegebenen ersten Belichtungsmuster (431 - 433) und in einem ersten Spektralband;
- Detektieren eines Lichtstrahls, der von der Probe als Reaktion auf die Beleuchtung der Probe emittiert wird, in dem Sichtfeld und gemäß einem Detektionsmuster, um ein Detektionssignal zu bilden;
- Verarbeiten des Detektionssignals, um Informationen zur mikroskopischen Analyse der Probe zu erzeugen;
- Erzeugen eines Oberflächenreflexionszielbildes eines gegebenen effektiven Feldes der Probe, das das Sichtfeld einschließt, mittels eines Zielpfades (150), der das Mikroskopobjektiv, einen zweidimensionalen Detektor (155), ein oder mehrere Bildgebungselemente aufweist, die so konfiguriert sind, dass sie mit dem Mikroskopobjektiv eine Vollfeldbildgebungsvorrichtung (250) bilden, wobei das Erzeugen des Zielbildes folgende Schritte aufweist:
- die Vollfeldbeleuchtung der Probe in einem zweiten Spektralband;
- optisches Konjugieren des effektiven Feldes der Probe mit einem Erfassungsbereich (156) des zweidimensionalen Detektors (155) mittels der Vollfeldbildgebungsvorrichtung, um das Zielbild zu erzeugen;
- Anzeigen des Zielbildes und Anzeigen eines Bildelements (530) auf dem Zielbild, das die Position des Detektionsmusters anzeigt.

12. Verfahren zur Analyse einer Probe nach Anspruch 11, bei dem die mikroskopische Analyse der Probe und die Bildung eines Zielbildes kontinuierlich durchgeführt werden.

13. Verfahren zur Analyse einer Probe nach Anspruch 11, die folgenden Schritte aufweisend:
- einen ersten Schritt des Erzeugens eines Zielbildes der Probe ohne Beleuchtung der mikroskopischen Analysenstrecke,
- das Erfassen eines interessierenden Analysebereichs in dem Zielbild der Probe und
- die mikroskopische Analyse der Probe in dem interessierenden Bereich.

14. Verfahren zur Analyse einer Probe nach Anspruch 13, wobei die Beleuchtung des Zielpfades während der mikroskopischen Analysenstrecke der Probe ausgeschaltet wird.

15. Verfahren zur Analyse einer Probe nach einem der Ansprüche 11 bis 14, wobei die mikroskopische Analyse der Probe eine konfokale und/oder tomographische Abbildung der Probe mittels optischer Kohärenz aufweist.

16. Verfahren zur Analyse einer Probe nach Anspruch 15, wobei die mikroskopische Analyse der Probe das Erzeugen von B-Scan-Bildern mit einer vorgegebenen Abbildungsrate aufweist und die Abbildungsrate mit einer Zielbilderfassungsrate synchronisiert ist.

17. Verfahren zur Analyse einer Probe nach einem der Ansprüche 11 bis 14, wobei die mikroskopische Analyse der Probe eine spektroskopische Analyse der Probe aufweist.

18. Verfahren zur Analyse einer Probe nach einem der Ansprüche 11 bis 17, aufweisend einen vorhergehenden Kalibrierungsschritt, mit dem für das Bildelement ein grafisches Element bestimmt werden kann, das die Position des Detektionsmusters angibt.

19. Verfahren zur Analyse einer Probe nach einem der Ansprüche 11 bis 18, aufweisend ferner das Anzeigen eines Markers (640, 740), der dem Bildelement des Zielbildes überlagert ist, wobei der Marker einem Benutzer ermöglicht, einen Punkt von Interesse innerhalb des Detektionsmusters anzusteuern.

20. Verfahren zur Analyse einer Probe nach einem der Ansprüche 11 bis 19, wobei die Probe ein biologisches Gewebe, z. B. die Haut, ist.

## Claims

1. A system (101-103) for microscopic analysis of a sample (S), comprising:
- a microscopic analysis path (140) comprising:
- a microscope objective (110) of given nominal numerical aperture (NA) in a given field of view (401);
- an illumination path (120) configured to illuminate the sample through the microscope objective according to a first illumination pattern and in a first spectral band;
- a detection path (130) comprising said microscope objective, said detection path being configured to detect in said field of view, and according to a detection pattern (431-433), a light beam emitted by the sample in response to said illumination of the sample, and to generate a detection signal;
- a processing unit (160) configured to generate information on microscopic analysis of the sample from said detection signal;
- a sighting path (150) comprising:
- said microscope objective (110);
- a full-field illumination device (158) configured to illuminate the sample in a second spectral band;
- a two-dimensional detector (155);
- one or more imaging elements (251-253) forming, with said microscope objective (110), a full-field imaging device (250) configured to optically conjugate a given effective field of the sample encompassing said field of view with a detection area (156) of the two-dimensional detector (155), and to form a sighting image in surface reflection of said effective field;
- a beam splitter element (145) arranged upstream of the microscope obj ective in order to separate the analysis path and the sighting path;
- a display module (170) configured to show said sighting image and, on said sighting image, an image element (530) indicating the position of said detection pattern.

2. The system for analysis of a sample as claimed in claim 1, in which the full-field imaging device has, in the object space of the microscope objective, a numerical aperture strictly less than the nominal numerical aperture of the microscope objective.

3. The system for analysis of a sample as claimed in claim 2, in which said sighting path further comprises a diaphragm (255) for limiting said numerical aperture of the full-field imaging device.

4. The system for analysis of a sample as claimed in any one of the preceding claims, in which the full-field imaging device of said sighting path is adjustable in focus.

5. The system for analysis of a sample as claimed in any one of the preceding claims, in which the full-field illumination device of the sighting path comprises a plurality of light sources (158) arranged on a periphery of a distal face of the microscope objective.

6. The system for analysis of a sample as claimed in any one of the preceding claims, in which said second spectral band differs at least partially from said first spectral band, and said sighting path comprises means for reducing the light power at least in said first spectral band.

7. The system for analysis of a sample as claimed in any one of the preceding claims, in which said second spectral band differs at least partially from said first spectral band, and said beam splitter element comprises a dichroic element configured to split the beams in each of said first and second spectral bands.

8. The system for analysis of a sample as claimed in any one of the preceding claims, in which said image element indicating the position of said detection pattern comprises a graphic element determined by means of a prior calibration.

9. The system for analysis of a sample as claimed in any one of the preceding claims, in which said microscopic analysis path is a confocal imaging path and/or an optical coherence tomographic imaging path, and said information on microscopic analysis of the sample comprises at least one image of the sample.

10. The system for analysis of a sample as claimed in any one of claims 1 through 8, in which said microscopic analysis path is a spectroscopic analysis path, and said information on microscopic analysis of the sample comprises at least one spectrum of said light beam emitted by the sample at at least one point of the sample.

11. A method for analysis of a sample (S), comprising:
- a microscopic analysis of the sample by means of a microscopic analysis path comprising a microscope objective (110) of given nominal numerical aperture (NA) in a given field of view (401), said microscopic analysis comprising:
- illuminating the sample through the microscope objective according to a first given illumination pattern (431-433) and in a first spectral band;
- detecting in said field of view, and according to a detection pattern, a light beam emitted by the sample in response to said illumination of the sample in order to form a detection signal;
- processing said detection signal in order to generate information on microscopic analysis of the sample;
- the formation of a sighting image in surface reflection of a given effective field of the sample encompassing said field of view, by means of a sighting path (150) comprising said microscope objective, a two-dimensional detector (155), one or more imaging elements configured to form with said microscope objective a full-field imaging device (250), the formation of the sighting image comprising:
- full-field illumination of the sample in a second spectral band;
- optical conjugation of the effective field of the sample with a detection area (156) of the two-dimensional detector (155), by means of said full-field imaging device, in order to form said sighting image;
- displaying said sighting image and, on said sighting image, displaying an image element (530) indicating the position of said detection pattern.

12. The method for analysis of a sample as claimed in claim 11, in which the microscopic analysis of the sample and the formation of a sighting image are carried out continuously.

13. The method for analysis of a sample as claimed in claim 11, comprising:
- a first step of forming a sighting image of the sample without illumination of the microscopic analysis path,
- the detection of an analysis zone of interest in the sighting image of the sample, and
- the microscopic analysis of said sample in said zone of interest.

14. The method for analysis of a sample as claimed in claim 13, in which the illumination of the sighting path is turned off during the microscopic analysis of the sample.

15. The method for analysis of a sample as claimed in any one of claims 11 through 14, in which the microscopic analysis of the sample comprises confocal and/or optical coherence tomographic imaging of the sample.

16. The method for analysis of a sample as claimed in claim 15, in which the microscopic analysis of the sample comprises the formation of B-scan type images with a given imaging rate, and said imaging rate is synchronized with a rate of acquisition of the sighting images.

17. The method for analysis of a sample as claimed in any one of claims 11 through 14, in which the microscopic analysis of the sample comprises a spectroscopic analysis of the sample.

18. The method for analysis of a sample as claimed in any one of claims 11 through 17, comprising a prior calibration step making it possible to determine, for said image element, a graphic element indicating the position of said detection pattern.

19. The method for analysis of a sample as clamed in any one of claims 11 through 18, further comprising displaying a marker (640, 740) superimposed on said image element of the sighting image, said marker allowing a user to target a point of interest in the detection pattern.

20. The method for analysis of a sample as claimed in any one of claims 11 through 19, in which the sample is a biological tissue, for example skin.
